(19) Europäisches Patentamt
European Patent Office
Office européen des brevets

(11) **EP 3 586 450 B1**

(12) **EUROPEAN PATENT SPECIFICATION**

(45) Date of publication and mention
of the grant of the patent:
**02.06.2021 Bulletin 2021/22**

(51) Int Cl.:
*H04B 1/40* *(2015.01)*     *H04B 17/12* *(2015.01)*
*H04B 17/21* *(2015.01)*     *H01Q 21/26* *(2006.01)*
*H01Q 21/28* *(2006.01)*     *H01Q 3/26* *(2006.01)*
*H04B 17/336* *(2015.01)*     *H04B 17/30* *(2015.01)*
*H04B 7/06* *(2006.01)*

(21) Application number: **18763061.1**

(22) Date of filing: **06.03.2018**

(86) International application number:
**PCT/KR2018/002669**

(87) International publication number:
**WO 2018/164461 (13.09.2018 Gazette 2018/37)**

(54) **METHODS AND APPARATUS FOR CALIBRATION AND ARRAY OPERATION IN ADVANCED MIMO SYSTEM**

VERFAHREN UND VORRICHTUNG ZUR KALIBRIERUNG UND ARRAYOPERATION IN EINEM ERWEITERTEN MIMO-SYSTEM

PROCÉDÉS ET APPAREIL POUR UN ÉTALONNAGE ET UN FONCTIONNEMENT DE RÉSEAU DANS UN SYSTÈME MIMO AVANCÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2017 US 201762467458 P**
**07.02.2018 US 201815891244**

(43) Date of publication of application:
**01.01.2020 Bulletin 2020/01**

(73) Proprietor: **Samsung Electronics Co., Ltd.**
**Suwon-si, Gyeonggi-do 16677 (KR)**

(72) Inventors:
- XU, Gary
  **Mountain View, California 94043 (US)**
- YUAN, Jin
  **Mountain View, California 94043 (US)**
- MONROE, Robert
  **Mountain View, California 94043 (US)**
- LI, Yang
  **Mountain View, California 94043 (US)**
- ZHANG, Jianzhong
  **Mountain View, California 94043 (US)**

- RAJAGOPAL, Sridhar
  **Mountain View, California 94043 (US)**

(74) Representative: **HGF**
**1 City Walk**
**Leeds LS11 9DX (GB)**

(56) References cited:
**EP-B1- 1 548 957**     **EP-B1- 1 763 150**
**WO-A1-2016/068591**     **US-A1- 2005 128 953**
**US-A1- 2012 020 396**     **US-A1- 2015 255 868**
**US-A1- 2016 344 483**     **US-B1- 8 891 598**

- **NATIONAL INSTRUMENTS: "Over The Air Calibration for Reciprocity Based MIMO", 3GPP DRAFT; R1-1609725 OVER THE AIR CALIBRATION FOR RECIPROCITY BASED MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Lisbon, Portugal; 20161010 - 20161014 30 September 2016 (2016-09-30), XP051158575, Retrieved from the Internet: URL:http://www.3gpp.org/ftp/tsg_ran/WG1_RL 1/TSGR1_86b/Docs/ [retrieved on 2016-09-30]**

## Description

### Technical Field

This disclosure relates generally to large array operations in advanced wireless communication systems. More specifically, this disclosure relates to calibration and array operations for a full dimension multi-input multi-output(FD-MIMO).

### Background Art

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post Long Term Evolution (LTE) System'.

The 5G communication system is considered to be implemented in higher frequency (mmWave) bands, e.g., 28GHz or 60GHz bands, so as to accomplish higher data rates. To decrease propagation loss of the radio waves and increase the transmission distance, the beamforming, massive multiple-input multiple-output(MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points(CoMP), reception-end interference cancellation and the like.

In the 5G system, Hybrid frequency shift keying (FSK) and quadrature amplitude modulation (FQAM) and sliding window superposition coding (SWSC) as an advanced coding modulation (ACM), and filter bank multicarrier (FBMC), non-orthogonal multiple access (NOMA), and sparse code multiple access (SCMA) as an advanced access technology have been developed.

Full-dimension MIMO (FD-MIMO) is a key technology introduced in 3GPP wireless communication systems to significantly increase system capacity. In FD-MIMO networks, an eNB deploys a large number of active antenna elements on a two-dimensional plane, i.e., a 2-dimensional (2D) active antenna array (AAA). With such antennas, an eNB can form beams steered towards angles on both horizontal and vertical directions, and is capable of supporting high-order MU-MIMO while fully ex-ploting spatial degrees of freedom. To realize the FD-MIMO gain, an eNB may acquire channel state information (CSI) of user equipments (UEs). For frequency division duplexing (FDD) systems, a CSI is acquired by training (e.g. via CSI reference signal (CSI-RS)) and feedback of precoding matrix indicator (PMI).

US 2015/255868 discloses a method and apparatus for calibrating an antenna array. The apparatus includes first and second couplers, a calibration transceiver, and a controller. The first coupler operably is connected to a first number of antennas. The second coupler is operably connected to a second number of antennas. The calibration transceiver is operably connected to the first and second couplers via a common path. The controller is configured to perform calibration on at least one or more transmit/receive paths for the second number of antennas based on at least one or more signals received from or transmitted to the first and second couplers via the common path by the calibration transceiver. The first and second numbers of antennas may each include only one antenna, or the first and second numbers of antennas may each be a group of multiple antennas.

National Instruments, "Over the Air Calibration for Reciprocity Based MIMO",3GPP DRAFT; R1-1609725, 3GPP, Mobile Competence Centre; 650, Route des Lucioles; F-06921 Sophia-Antipolis CED vol. RAN WG1, no. Lisbon, Portugal; 10th - 14th October 2016 (2016-09-30) discloses 5G Study Item regarding "Study on New Radio Access Technology" which has the objective to be able to operate from sub 1 GHz to 100 GHz in a large variety of deployment scenarios in a single technical framework. Reciprocity based operation is being considered as a candidate mode of operation for a number of NR use cases. In this contribution the necessity for reciprocity calibration and compensation is shown, along with an over the air signaling framework to exchange information necessary to compute and apply the reciprocity coefficients.

### Disclosure of Invention

### Technical Problem

The present disclosure relates to a pre-5th-generation (5G) or 5G communication system to be provided for supporting higher data rates beyond 4th-generation (4G) communication system such as long term evolution (LTE). Embodiments of the present disclosure provide a calibration and array operation in advanced MIMO systems.

**Solution to Problem**

The invention is defined by the appended independent claims, an apparatus according to claim 1 and a method according to claim 10. Dependent claims constitute embodiments of the invention. any other subject-matter falling outside the scope of the claims is to be regarded as an example not in accordance with the invention. In one embodiment, an apparatus for a calibration and array operation in a multi-input multi-output (MIMO) system is provided. The apparatus includes an antenna array comprising a plurality of antennas, transceiver processing circuitry configured to generate an uplink channel measurement (HR) based on one or more uplink signals received via the antenna array, and a coupling network. The apparatus further includes a calibration system electrically connected to each of the antennas in the antenna array via the coupling network, the calibration system including calibration transmitter (Tx) configured to send a calibration signal via the coupling network for transmission by each of the antennas in the antenna array and a calibration receiver (Rx) processing circuitry configured to generate an Rx calibration measurement ($R_1$) based on the one or more uplink signals received via both the antenna array and the coupling network and generate a Tx calibration measurement ($T_1$) based on receipt of the calibration signal from each of the antennas via the coupling network. The apparatus further includes at least one processor configured to perform a joint Tx/Rx (TRx) calibration based on HR, $R_1$, and $T_1$.

In another embodiment, a method for a calibration and array operation in a multi-input multi-output (MIMO) system is provided. The method comprises generating an uplink channel measurement (HR) based on one or more uplink signals received via an antenna array comprising a plurality of antennas, sending a calibration signal via a coupling network for transmission by each of the antennas in the antenna array, generating an Rx calibration measurement ($R_1$) based on the one or more uplink signals received via both the antenna array and the coupling network, generating a Tx calibration measurement ($T_1$) based on receipt of the calibration signal from each of the antennas via the coupling network, and perform a joint Tx/Rx (TRx) calibration based on HR, $R_1$, and $T_1$.

In yet another embodiment, an apparatus in a wireless communication system is provided. The apparatus includes an antenna array comprising a plurality of antennas; a transceiver array comprising a plurality of transceivers electrically connected to one or more of the antennas, respectively; a coupling network electrically connected to each of the transceivers; a calibration transceiver electrically connected to each of the transceivers in a transceiver array via the coupling network at each antenna including a calibration transmitter (Tx) configured to transmit a calibration signal via the coupling network and a calibration receiver (Rx) configured to receive the calibration signal via the coupling network, wherein the calibration receiver (Rx) is configured to: generate an Rx calibration measurement based on one or more uplink signals received via the antenna array and the coupling network, and generate a Tx calibration measurement based on receipt of the calibration signal from each of the antennas via the coupling network; and at least one processor configured to perform a joint Tx/Rx (TRx) calibration based on a uplink channel measurement, the Rx calibration measurement, and the Tx calibration measurement.

In yet another embodiment, a method for an apparatus in a wireless communication system is provided. The method includes transmitting a calibration signal via a coupling network; receiving the calibration signal via the coupling network; generating an Rx calibration measurement based on one or more uplink signals received via antenna array and the coupling network; generating a Tx calibration measurement based on receipt of the calibration signal from each of antennas via the coupling network; and performing a joint Tx/Rx (TRx) calibration based on a uplink channel measurement, the Rx calibration measurement, and the Tx calibration measurement.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions,objects, classes, instances, related data, or a portion thereof adapted for implementation in a suitablecomputer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as futureuses of such defined words and phrases.

Aspects, features, and advantages of the present disclosure are readily apparent from the following detailed description, simply by illustrating a number of particular embodiments and implementations, including the best mode contemplated for carrying out the present disclosure. Accordingly, the drawings and description are to be regarded as illustrative in nature, and not as restrictive. The present disclosure is illustrated by way of example, and not by way of limitation, in the figures of the accompanying drawings.

In the following, for brevity, both FDD and TDD are considered as the duplexmethod for both DL and UL signaling.

Although exemplary descriptions and embodiments to follow assume orthogonal frequency division multiplexing(OFDM) or orthogonal frequency division multiple access (OFDMA), disclosure can be extended to other OFDM-based transmission waveforms or multiple access schemes such as filtered OFDM (F-OFDM).

This present disclosure covers several components which can be used in conjunction or in combination with one another, or can operate as standalone schemes.

## Advantageous Effects of Invention

A method and an apparatus according to various embodiments of the present disclosure allow to achieve accurate large scale antenna array beamforming of FD-MIMO and support high-order MU-MIMO in a 5G communication system.

## Brief Description of Drawings

For a more complete understanding of the present disclosure and its advantages, reference is now made to the following description taken in conjunction with the accompanying drawings, in which like reference numerals represent like parts:

FIGURE. 1 illustrates a wireless communication system according to various embodiments of the present disclosure;
FIGURE. 2 illustrates the BS in the wireless communication system according to various embodiments of the present disclosure;
FIGURE. 3 illustrates the terminal in the wireless communication system according to various embodiments of the present disclosure;
FIGURE. 4 illustrates the communication interface in the wireless communication system according to various embodiments of the present disclosure;
FIGURE. 5 illustrates an example wireless network according to embodiments of the present disclosure;
FIGURE. 6 illustrates an example eNodeB (eNB) according to embodiments of the present disclosure;
FIGURE. 7 illustrates an example userequipment (UE) according to embodiments of the present disclosure;
FIGURE. 8A illustrates a high-level diagram of an orthogonal frequency division multiple access transmit path according to embodiments of the present disclosure;
FIGURE. 8B illustrates a high-level diagram of an orthogonal frequency division multiple access receive path according to embodiments of the present disclosure;
FIGURE. 9 illustrates an example structure for a downlink (DL) subframeaccording to embodiments of the present disclosure;
FIGURE. 10 illustrates an example channel mismatch in time division duplexing(TDD) system according to embodiments of the present disclosure;
FIGURE. 11 illustrates an example separate transmit/receive (Tx/Rx) calibration according to embodiments of the present disclosure;
FIGURE. 12 illustrates an example two-step joint Tx/Rx calibration according to embodiments of the present disclosure;

FIGURE. 13 illustrates an example Tx phase calibration according to embodiments of the present disclosure;

FIGURE. 14 illustrates an example Rx phase calibration according to embodiments of the present disclosure;

FIGURE. 15 illustrates an example coupling network according to embodiments of the present disclosure;

FIGURE. 16 illustrates an example antenna grouping in hybrid calibration according to embodiments of the present disclosure;

FIGURE. 17 illustrates an example coupling network in hybrid calibration according to embodiments of the present disclosure;

FIGURE. 18 illustrates example antenna groups for open loop beamforming and virtualization according to embodiments of the present disclosure;

FIGURE. 19 illustrates example simulation results according to embodiments of the present disclosure;

FIGURE. 20 illustrates another example coupling network according to embodiments of the present disclosure; and

FIGURE. 21 illustrates an example flow chart of a method for calibration and array operation according to embodiments of the present disclosure.

## Best Mode for Carrying out the Invention

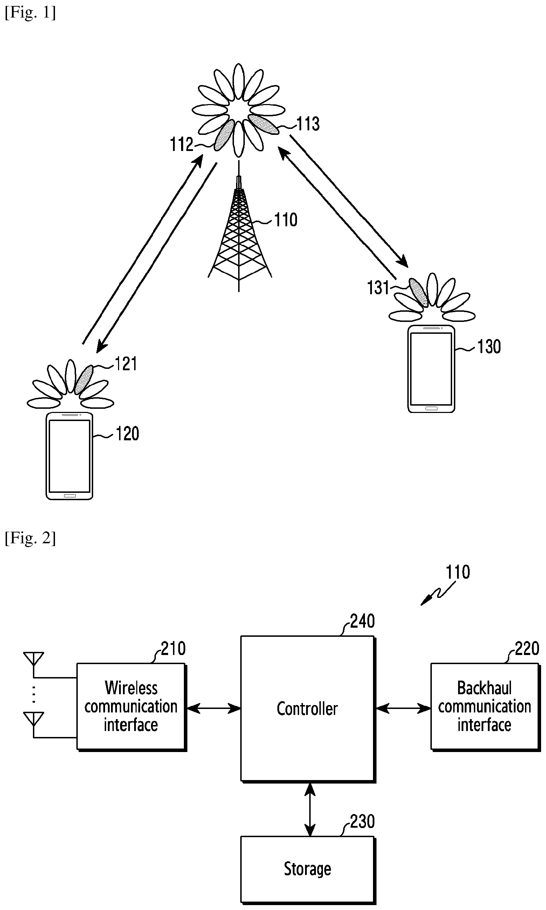

FIGURES 1 through FIGURE 21, discussed below, and the various embodiments used to describe the principles of the present disclosure in this patent document are by way of illustration only and should not be construed in any way to limit the scope of the disclosure. Those skilled in the art may understand that the principles of the present disclosure may be implemented in any suitably arranged system or device.

Hereinafter, in various embodiments of the present disclosure, hardware approaches will be described as an example. However, various embodiments of the present disclosure include a technology that uses both hardware and software and thus, the various embodiments of the present disclosure may not exclude the perspective of software.

Hereinafter, the present disclosure describes technology for calibration and array operations for a fulldimension multi-input multi-output(FD-MIMO) in a wireless communication system.

The terms referring to calibration signal, the terms referring to a signal, the terms referring to a channel, the terms referring to control information, the terms referring to a network entity, and the terms referring to elements of a device used in the following description are used only for convenience of the description. Accordingly, the present disclosure is not limited to the following terms, and other terms having the same technical meaning may be used.

Further, although the present disclosure describes various embodiments based on the terms used in some communication standards (for example, 3rd Generation Partnership Project (3GPP)), they are only examples for the description. Various embodiments of the present disclosure may be easily modified and applied to other communication systems.

FIGURE. 1 illustrates a wireless communication system according to various embodiments of the present disclosure. In FIGURE. 1, a base station (BS) 110, a terminal 120, and a terminal 130 are illustrated as the part of nodes using a wireless channel in a wireless communication system. FIGURE. 1 illustrates only one BS, but another BS, which is the same as or similar to the BS 110, may be further included.

The BS 110 is network infrastructure that provides wireless access to the terminals 120 and 130. The BS 110 has coverage defined as a predetermined geographical region based on the distance at which a signal can be transmitted. The BS 110 may be referred to as "access point (AP)," "eNodeB (eNB)," "5th generation (5G) node," "wireless point," "transmission/reception Point (TRP)" as well as "base station."

Each of the terminals 120 and 130 is a device used by a user, and performs communication with the BS 110 through a wireless channel. Depending on the case, at least one of the terminals 120 and 130 may operate without user involvement. That is, at least one of the terminals 120 and 130 is a device that performs machine-type communication (MTC) and may not be carried by the user. Each of the terminals 120 and 130 may be referred to as "user equipment (UE)," "mobile station," "subscriber station," "remote terminal," "wireless terminal," or "user device" as well as "terminal."

The BS 110, the terminal 120, and the terminal 130 may transmit and receive wireless signals in millimeter wave (mmWave) bands (for example, 28 GHz, 30 GHz, 38 GHz, and 60 GHz). At this time, in order to improve a channel gain, the BS 110, the terminal 120, and the terminal 130 may perform beamforming. The beamforming may include transmission beamforming and reception beamforming. That is, the BS 110, the terminal 120, and the terminal 130 may assign directivity to a transmission signal and a reception signal. To this end, the BS 110 and the terminals 120 and 130 may select serving beams 112, 113, 121, and 131 through a beam search procedure or a beam management procedure. After that, communications may be performed using resources having a quasico-located relationship with resources carrying the serving beams 112, 113, 121, and 131.

A first antenna port and a second antenna ports are considered to be quasico-located if the large-scale properties of the channel over which a symbol on the first antenna port is conveyed can be inferred from the channel over which a symbol on the second antenna port is conveyed. The large-scale properties may include one or more of delay spread, doppler spread, doppler shift, average gain, average delay, and spatial Rx parameters.

FIGURE. 2 illustrates the BS in the wireless communication system according to various embodiments of the present disclosure. A structure exemplified at FIGURE. 2 may be understood as a structure of the BS 110. The term "-module", "-unit" or "-er" used hereinafter may refer to the unit for processing at least one functionor operation and may be implemented in hardware, software, or a combination of hardware and software.

Referring to FIGURE. 2, the BS may include a wireless communication interface 210, a backhaul communication interface 220, a storage unit 230, and a controller 240.

The wireless communication interface 210 performs functions for transmitting and receiving signals through a wireless channel. For example, the wireless communication interface 210 may perform a function of conversion between a baseband signal and bitstreams according to a physical layer standard of the system. For example, in data transmission, the wireless communication interface 210 generates complex symbols by encoding and modulating transmission bitstreams. Further, in data reception, the wireless communication interface 210 reconstructs reception bitstreams by demodulating and decoding the baseband signal.

In addition, the wireless communication interface 210 up-converts the baseband signal into an Radio Frequency (RF) band signal, transmits the converted signal through an antenna, and then down-converts the RF band signal received through the antenna into the baseband signal. To this end, the wireless communication interface 210 may include a transmission filter, a reception filter, an amplifier, a mixer, an oscillator, a digital-to-analog convertor (DAC), an analog-to-digital convertor (ADC), and the like. Further, the wireless communication interface 210 may include a plurality of transmission/reception paths. In addition, the wireless communication interface 210 may include at least one antenna array consisting of a plurality of antenna elements.

On the hardware side, the wireless communication interface 210 may include a digital unit and an analog unit, and the analog unit may include a plurality of subunits according to operation power, operation frequency, and the like. The digital unit may be implemented as at least one processor (e.g., a digital signal processor (DSP)).

The wireless communication interface 210 transmits and receives the signal as described above. Accordingly, the wireless communication interface 210 may be referred to as a "transmitter" a "receiver," or a "transceiver." Further, in the following description, transmission and reception performed through the wireless channel may be used to have a meaning including the processing performed by the wireless communication interface 210 as described above.

The backhaul communication interface 220 provides an interface for performing communication with other nodes within the network. That is, the backhaul communication interface 220 converts bitstreams transmitted to another node, for example, another access node, another BS, a higher node, or a core network, from the BS into a physical signal and converts the physical signal received from the other node into the bitstreams.

The storage unit 230 stores a basic program, an application, and data such as setting information for the operation of the BS 110. The storage unit 230 may include a volatile memory, a non-volatile memory, or a combination of volatile memory and non-volatile memory. Further, the storage unit 230 provides stored data in response to a request from the controller 240.

The controller 240 controls the general operation of the BS. For example, the controller 240 transmits and receives a signal through the wireless communication interface 210 or the backhaul communication interface 220. Further, the controller 240 records data in the storage unit 230 and reads the recorded data. The controller 240 may performs functions of a protocol stack that is required from a communication standard. According to another implementation, the protocol stack may be included in the wireless communication interface 210. To this end, the controller 240 may include at least one processor.

According to exemplary embodiments of the present disclosure, the controller 240 may control to transmit a calibration signal and a pre-designed training sequence, via a coupling network; control to receive the calibration signal and the pre-designed training sequence via the coupling network; generate an Rx calibration measurement based on one or more uplink signals received via antenna array and the coupling network; generate a Tx calibration measurement based on receipt of the calibration signal from each of antennas via the coupling network; and perform a joint Tx/Rx (TRx) calibration based on a uplink channel measurement, the Rx calibration measurement , and the Tx calibration measurement. For example, the controller 240 may control the base station to perform operations according to the exemplary embodiments of the present disclosure.

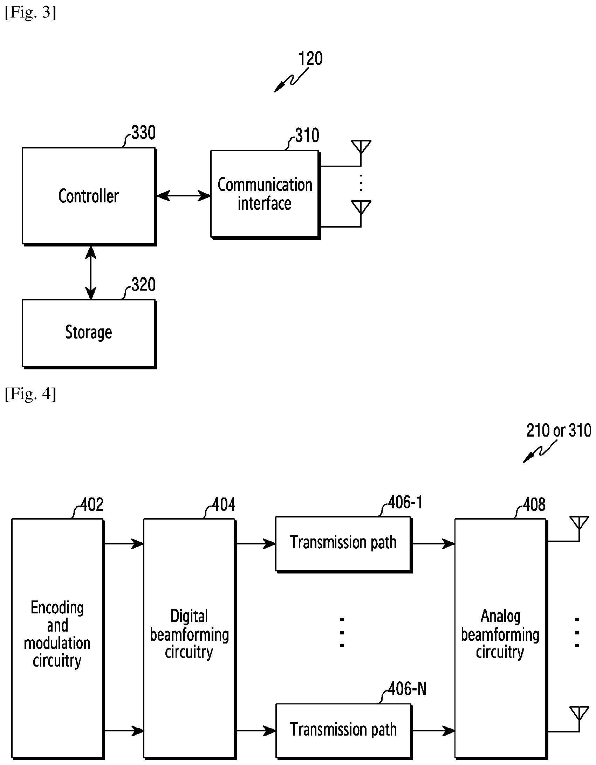

FIGURE. 3 illustrates the terminal in the wireless communication system according to various embodiments of the present disclosure. A structure exemplified at FIGURE. 3 may be understood as a structure of the terminal 120 or the terminal 130. The term "-module", "-unit" or *jer" used hereinafter may refer to the unit for processing at least one functionor operation, and may be implemented in hardware, software, or a combination of hardware and software.

Referring to FIGURE. 3, the terminal 120 includes a communication interface 310, a storage unit 320, and a controller 330.

The communication interface 310 performs functions for transmitting/receiving a signal through a wireless channel. For example, the communication interface 310 performs a function of conversion between a baseband signal and bitstreams according to the physical layer standard of the system. For example, in data transmission, the communication interface 310 generates complex symbols by encoding and modulating transmission bitstreams. Also, in data reception, the communication interface 310 reconstructs reception bitstreams by demodulating and decoding the baseband signal. In addition, the communication interface 310 up-converts the baseband signal into an RF band signal, transmits the converted signal through an antenna, and then down-converts the RF band signal received through the antenna into the baseband signal. For example, the communication interface 310 may include a transmission filter, a reception filter, an amplifier, a mixer, an oscillator, a DAC, and an ADC.

Further, the communication interface 310 may include a plurality of transmission/ reception paths. In addition, the communication interface 310 may include at least one antenna array consisting of a plurality of antenna elements. In the hardware side, the wireless communication interface 210 may include a digital circuit and an analog circuit (for example, a radio frequency integrated circuit (RFIC)). The digital circuit and the analog circuit may be implemented as one package. The digital circuit may be implemented as at least one processor (e.g., a DSP). The communication interface 310 may include a plurality of RF chains. The communication interface 310 may perform beamforming.

The communication interface 310 transmits and receives the signal as described above. Accordingly, the communication interface 310 may be referred to as a "transmitter," a "receiver," or a "transceiver." Further, in the following description, transmission and reception performed through the wireless channel is used to have a meaning including the processing performed by the communication interface 310 as described above.

The storage unit 320 stores a basic program, an application, and data such as setting information for the operation of the terminal 120. The storage unit 320 may include a volatile memory, a non-volatile memory, or a combination of volatile memory and non-volatile memory. Further, the storage unit 320 provides stored data in response to a request from the controller 330.

The controller 330 controls the general operation of the terminal 120. For example, the controller 330 transmits and receives a signal through the communication interface 310. Further, the controller 330 records data in the storage unit 320 and reads the recorded data. The controller 330 may performs functions of a protocol stack that is required from a communication standard. According to another implementation, the protocol stack may be included in the communication interface 310. To this end, the controller 330 may include at least one processor or microprocessor, or may play the part of the processor. Further, the part of the communication interface 310 or the controller 330 may be referred to as a communication processor (CP).

According to exemplary embodiments of the present disclosure, the controller 330 may control to transmit a calibration signal and a pre-designed training sequence, via a coupling network; control to receive the calibration signal and the pre-designed training sequence via the coupling network; generate an Rx calibration measurement based on one or more uplink signals received via antenna array and the coupling network; generate a Tx calibration measurement based on receipt of the calibration signal from each of antennas via the coupling network; and perform a joint Tx/Rx (TRx) calibration based on a uplink channel measurement, the Rx calibration measurement , and the Tx calibration measurement. For example, the controller 330 may control the terminal to perform operations according to the exemplary embodiments of the present disclosure.

FIGURE. 4 illustrates the communication interface in the wireless communication system according to various embodiments of the present disclosure. FIGURE. 4 shows an example for the detailed configuration of the communication interface 210 of FIGURE. 2 or the communication interface 310 of FIGURE. 3. More specifically, FIGURE. 4 shows elements for performing beamforming as part of the communication interface 210 of FIGURE. 2 or the communication interface 310 of FIGURE. 3.

Referring to FIGURE. 4, the communication interface 210 or 310 includes an encoding and circuitry 402, a digital circuitry 404, a plurality of transmission paths 406-1 to 406-N, and an analog circuitry 408.

The encoding and circuitry 402 performs channel encoding. For the channel encoding, at least one of a low-density parity check (LDPC) code, a convolution code, and a polar code may be used. The encoding and circuitry 402 generates modulation symbols by performing constellation mapping.

The digital circuitry 404 performs beamforming for a digital signal (for example, modulation symbols). To this end, the digital circuitry 404 multiples the modulation symbols by beamforming weighted values. The beamforming weighted values may be used for changing the size and phrase of the signal, and may be referred to as a "precoding matrix" or a "precoder." The digital circuitry 404 outputs the digitally beamformed modulation symbols to the plurality of transmission paths 406-1 to 406-N. At this time, according to a multiple input multiple output(MIMO) transmission scheme, the modulation symbols may be multiplexed, or the same modulation symbols may be provided to the plurality of transmission paths 406-1 to 406-N.

The plurality of transmission paths 406-1 to 406-N convert the digitally beamformed digital signals into analog signals. To this end, each of the plurality of transmission paths 406-1 to 406-N may include an inverse fast Fourier transform (IFFT) calculation unit, a cyclic prefix (CP) insertion unit, a DAC, and an up-conversion unit. The CP insertion unit is for an orthogonal frequency division multiplexing(OFDM) scheme, and may be omitted when another physical layer scheme (for example, a filter bank multi-carrier:FBMC) is applied. That is, the plurality of transmission paths 406-1 to 406-N provide independent signal processing processes for a plurality of streams generated through the digital beamforming. However, depending on the implementation, some of the elements of the plurality of transmission paths 406-1 to 406-N may be used in common.

The analog circuitry 408 performs beamforming for analog signals. To this end, the digital circuitry 404 multiples the analog signals by beamforming weighted values. The beamformed weighted values are used for changing the size and phrase of the signal. More specifically, according to a connection structure between the plurality of transmission paths 406-1 to 406-N and antennas, the analog circuitry 408 may be configured in various ways. For example, each of the plurality of transmission paths 406-1 to 406-N may be connected to one antenna array. In another example, the plurality of transmission paths 406-1 to 406-N may be connected to one antenna array. In still another example, the plurality of transmission paths 406-1 to 406-N may be adaptively connected to one antenna array, or may be connected to two or more antenna arrays.

Methods according to embodiments stated in claims and/or specifications of the present disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which is accessible through communication networks such as the Internet, Intranet, local area network (LAN), wide area network (WAN), and storage area network (SAN), or a combination thereof. Such a storage device may access the electronic device via an external port. Further, a separate storage device on the communication network may access a portable electronic device.

In the above-described detailed embodiments of the present disclosure, a component included in the present disclosure is expressed in the singular or the plural according to a presented detailed embodiment. However, the singular form or plural form is selected for convenience of description suitable for the presented situation, and various embodiments of the present disclosure are not limited to a single element or multiple elements thereof. Further, either multiple elements expressed in the description may be configured into a single element or a single element in the description may be configured into multiple elements.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, butshould be defined by the appended claims.

Although the present disclosure has been described with an exemplary embodiment, various changes and modifications may be suggested to one skilled in the art. It is intended that the present disclosure encompass such changes and modifications as fall within the scope of the appended claims.

To meet the demand for wireless data traffic having increased since deployment of 4G communication systems, efforts have been made to develop an improved 5G or pre-5G communication system. Therefore, the 5G or pre-5G communication system is also called a "beyond 4G network" or a "post LTE system."

The 5G communication system is considered to be implemented in higher frequency (mmWave) bands, e.g., 60GHz bands, so as to accomplish higher data rates. To decrease propagation loss of the radio waves and increase the transmission coverage, the beamforming, massive multiple-input multiple-output (MIMO), full dimensional MIMO (FD-MIMO), array antenna, an analog beam forming, large scale antenna techniques and the like are discussed in 5G communication systems.

In addition, in 5G communication systems, development for system network improvement is under way based on advanced small cells, cloud radio access networks (RANs), ultra-dense networks, device-to-device (D2D) communication, wireless backhaul communication, moving network, cooperative communication, coordinated multi-points (CoMP) transmission and reception, interference mitigation and cancellation and the like.

In the 5G system, hybrid frequency shift keying and quadrature amplitude modulation (FQAM) and sliding window superposition coding (SWSC) as an adaptive modulation and coding (AMC) technique, and filter bank multi carrier(FBMC), non-orthogonal multiple access(NOMA), and sparse code multiple access (SCMA) as an advanced access technology have been developed.

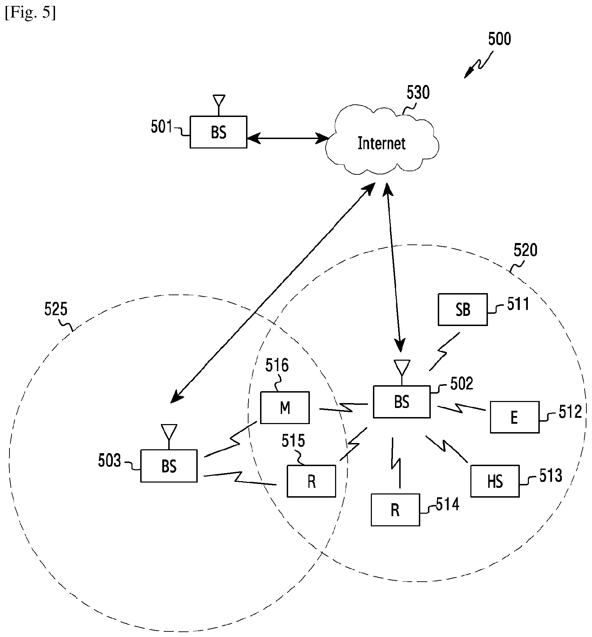

FIGURES 5-8B below describe various embodiments implemented in wireless communications systems and with the use of OFDM or OFDMA communication techniques. The descriptions of FIGURES 5-7 are not meant to imply physical or architectural limitations to the manner in which different embodiments may be implemented. Different embodiments of the present disclosure may be implemented in any suitably-arranged communications system.

FIGURE. 5 illustrates an example wireless network 500 according to embodiments of the present disclosure. The embodiment of the wireless network 500 shown in FIGURE. 5 is for illustration only. Other embodiments of the wireless network 500 could be used without departing from the scope of this disclosure.

As shown in FIGURE. 5, the wireless network 500 includes an eNB 501, an eNB 502, and an eNB 503. The eNB 501 communicates with the eNB 502 and the eNB 503. The eNB 501 also communicates with at least one network 130, such as the Internet, a proprietary Internet Protocol (IP) network, or other data network.

The eNB 502 provides wireless broadband access to the network 530 for a first plurality of user equipments (UEs) within a coverage area 520 of the eNB 502. The first plurality of UEs includes a UE 511, which may be located in a small business(SB); a UE 512, which may be located in an enterprise (E); a UE 513, which may be located in a WiFi hotspot (HS); a UE 514, which may be located in a first residence (R); a UE 515, which may be located in a second residence (R); and a UE 516, which may be a mobile device (M), such as a cell phone, a wireless laptop, a wireless PDA, or the like. The eNB 503 provides wireless broadband access to the network 530 for a second plurality of UEs within a coverage area 525 of the eNB 503. The second plurality of UEs includes the UE 515 and the UE 516. In some embodiments, one or more of the eNBs 501-503 may communicate with each other and with the UEs 511-516 using5G, LTE, LTE-A, WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), gNB, a macrocell, a femtocell, a WiFi access point (AP), or other wirelessly enabled devices. Base stations may provide wireless access in accordance with one or more wireless communication protocols, e.g., 5G 3GPP New Radio Interface/Access (NR), long term evolution (LTE), LTE advanced (LTE-A), high speed packet Access (HSPA), Wi-Fi 802.11a/b/g/n/ac, etc. For the sake of convenience, the terms "eNodeB" and "eNB" are used in this patent document to refer to network infrastructure components that provide wireless access to remote terminals. Also, depending on the network type, other well-known terms may be usedinstead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

Dotted lines show the approximate extents of the coverage areas 520 and 525, which are shown as approximately circular for the purposes of illustration and explanation only. It should be clearly understood that the coverage areas associated with eNBs, such as the coverage areas 520 and 525, may have other shapes, including irregular shapes, depending upon the configuration of the eNBs and variations in the radio environment associated with natural and man-made obstructions.

As described in more detail below, one or more of the UEs 511-516 include circuitry, programing, or a combination thereof, for efficient calibration and array operation in an advanced wireless communication system.

Although FIGURE. 5 illustrates one example of a wireless network 500, various changes may be made to FIGURE. 5. For example, the wireless network 500 could include any number of eNBs and any number of UEs in any suitablearrangement. Also, the eNB 501 could communicate directly with any number of UEs and provide those UEs with wireless broadband access to the network 530. Similarly, each eNB 502-503 could communicate directly with the network 530 and provide UEs with direct wireless broadband access to the network 530. Further,the eNBs 501, 502, and/or 503 could provide access to other or additional external networks, such as external telephone networks or other types of data networks.

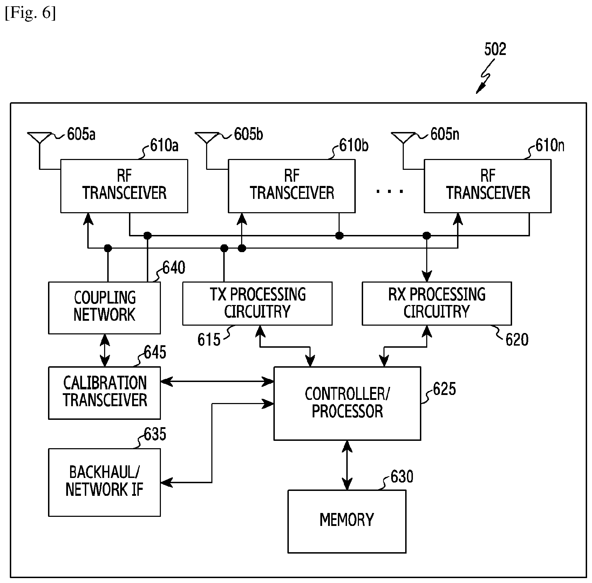

FIGURE. 6 illustrates an example eNB 502 according to embodiments of the present disclosure. The embodiment of the eNB 502 illustrated in FIGURE. 6 is for illustration only, and the eNBs 501 and 503 of FIGURE. 5 could have the same or similar configuration. However, eNBs come in a wide variety of configurations, and FIGURE. 6 does not limit the scope of this disclosure to any particular implementation of an eNB.

As shown in FIGURE. 6, the eNB 502 includes multiple antennas 605a-605n (e.g., antenna array), multiple RF transceivers 610a-610n, transmit (TX) processing circuitry 615, and receive (RX) processing circuitry 620. The eNB 502 also includes a controller/processor 625, a memory 630, and a backhaul or network interface 635. The eNB also includes a coupling network 640 and a calibration transceiver 645.

The RF transceivers 610a-610n receive, from the antennas 605a-605n, incoming RF signals, such as signals transmitted by UEs in the network 500. The RF transceivers 610a-610n down-convert the incoming RF signals to generate IF or baseband signals. The IF or baseband signals are sent to the RX processing circuitry 620, which generates processed baseband signals by filtering, decoding, and/or digitizing the baseband or IF signals. The RX processing circuitry 620 transmits the processed baseband signals to the controller/processor 625 for further processing.

The TX processing circuitry 615 receives analog or digital data (such as voice data, web data, e-mail, or interactive video game data) from the controller/processor 625. The TX processing circuitry 615 encodes, multiplexes, and/or digitizes the outgoing baseband data to generate processed baseband or IF signals. The RF transceivers 610a-610n receive the outgoing processed baseband or IF signals from the TX processing circuitry 615 and up-converts the baseband or IF signals to RF signals that are transmitted via the antennas 605a-605n.

The controller/processor 625 can include one or more processors or other processing devices that control the overall operation of the eNB 502. For example, the controller/ processor 625 could control the reception of forward channel signals and the transmission of reverse channel signals by the RF transceivers 610a-610n, the RX processing circuitry 620, and the TX processing circuitry 615 in accordance with well-known principles. The controller/processor 625 could supportadditional functionsas well, such as more advanced wireless communication functions.For instance, the controller/processor 625 could supportbeam forming or directional routing operations in which outgoing signals from multiple antennas 605a-605n are weighted differently to effectively steer the outgoing signals in a desired direction. Any of a wide variety of other functionscould be supportedin the eNB 502 by the controller/processor 625. In some embodiments, the controller/processor 625 includes at least one microprocessor or microcontroller. As described in more detail below, the eNB 502 may include circuitry, programing, or a combination thereof. For example, controller/processor 625 can be configured to execute one or more instructions, stored in memory 630, that are configured to cause the controller/processor to process a calibration and array operation.

The controller/processor 625 is also capable of executing programs and other processes resident in the memory 630, such as an OS. The controller/processor 625 can move data into or out of the memory 630 as required by an executing process.

The controller/processor 625 is also coupled to the backhaul or network interface 635. The backhaul or network interface 635 allows the eNB 502 to communicate with other devices or systems over a backhaul connection or over a network. The interface 635 could supportcommunications over any suitable wired or wireless connection(s). For example, when the eNB 502 is implemented as part of a cellular communication system (such as one supporting5G, LTE, or LTE-A), the interface 635 could allow the eNB 502 to communicate with other eNBs over a wired or wireless backhaul connection. When the eNB 502 is implemented as an access point, the interface 635 could allow the eNB 502 to communicate over a wired or wireless local area network or over a wired or wireless connection to a larger network (such as the Internet). The interface 635 includes any suitablestructure supportingcommunications over a wired or wireless connection, such as an Ethernet or RF transceiver.

The memory 630 is coupled to the controller/processor 625. Part of the memory 630 could include a RAM, and another part of the memory 630 could include a Flash memory or other ROM.

Although FIGURE. 6 illustrates one example of eNB 502, various changes may be made to FIGURE. 6. For example, the eNB 502 could include any number of each component shown in FIGURE. 6. As a particular example, an access point could include a number of interfaces 635, and the controller/processor 625 could sup-portrouting functionsto route data between different network addresses. As another particular example, while shown as including a single instance of TX processing circuitry 615 and a single instance of RX processing circuitry 620, the eNB 502 could include multiple instances of each (such as one per RF transceiver). Also, various components in FIGURE. 6 could be combined, further subdivided, or omitted and additional components could be added according to particular needs.

In some embodiments, the eNB 502 could include an antenna array 605a-n comprising a plurality of antennas, transceiver processing circuitry to generate an uplink channel measurement (HR) based on uplink signals, and a coupling network 640. In some embodiments, the eNB 502 further includes a calibration system including calibration transceiver (e.g., calibration transmitter (Tx)) 645 to send a calibration signal via the coupling network and a calibration transceiver (e.g., calibration receiver (Rx)) 645 processing circuitry to generate an Rx calibration measurement ($R_1$). In some embodiments, the eNB 502 generates a Tx calibration measurement ($T_1$) based on the calibration signal and performs a joint Tx/Rx (TRx) calibration based on HR, $R_1$, and $T_1$.

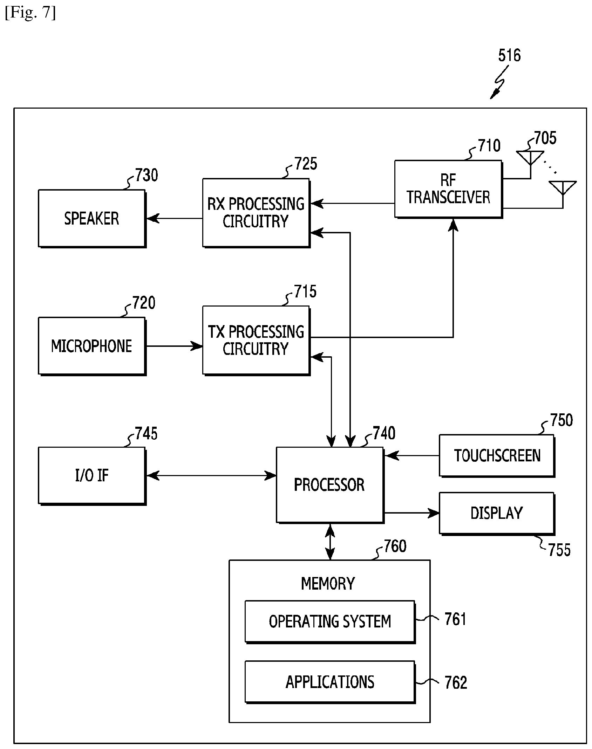

FIGURE. 7 illustrates an example UE 516 according to embodiments of the present disclosure. The embodiment of the UE 516 illustrated in FIGURE. 7 is for illustration only, and the UEs 511-515 of FIGURE. 5 could have the same or similar configuration. However, UEs come in a wide variety of configurations, and FIGURE. 7 does not limit the scope of this disclosure to any particular implementation of a UE.

As shown in FIGURE. 7, the UE 516 includes an antenna 705, a radio frequency (RF) transceiver 710, TX processing circuitry 715, a microphone 720, and receive (RX) processing circuitry 725. The UE 516 also includes a speaker 730, a processor 740, an input/output (I/O) interface (IF) 745, a touchscreen 750, a display 755, and a memory 760. The memory 760 includes an operating system (OS) 761 and one or more applications 762.

The RF transceiver 710 receives, from the antenna 705, an incoming RF signal transmitted by an eNB of the network 500. The RF transceiver 710 down-converts the incoming RF signal to generate an intermediate frequency (IF) or baseband signal. The IF or baseband signal is sent to the RX processing circuitry 725, which generates a processed baseband signal by filtering, decoding, and/or digitizing the baseband or IF signal. The RX processing circuitry 725 transmits the processed baseband signal to the speaker 730 (such as for voice data) or to the processor 740 for further processing (such as for web browsing data).

The TX processing circuitry 715 receives analog or digital voice data from the microphone 720 or other outgoing baseband data (such as web data, e-mail, or interactive video game data) from the processor 740. The TX processing circuitry 715 encodes, multiplexes, and/or digitizes the outgoing baseband data to generate a processed baseband or IF signal. The RF transceiver 710 receives the outgoing processed baseband or IF signal from the TX processing circuitry 715 and up-converts the baseband or IF signal to an RF signal that is transmitted via the antenna 705.

The processor 740 can include one or more processors or other processing devices and execute the OS 761 stored in the memory 760 in order to control the overall operation of the UE 516. For example, the processor 740 could control the reception of forward channel signals and the transmission of reverse channel signals by the RF transceiver 710, the RX processing circuitry 725, and the TX processing circuitry 715 in accordance with well-known principles. In some embodiments, the processor 740 includes at least one microprocessor or microcontroller.

The processor 740 is also capable of executing other processes and programs resident in the memory 760. The processor 740 can move data into or out of the memory 760 as required by an executing process. In some embodiments, the processor 740 is configured to execute the applications 762 based on the OS 761 or in response to signals received from eNBs or an operator. The processor 740 is also coupled to the I/ O interface 745, which provides the UE 516 with the ability to connect to other devices, such as laptop computers and handheld computers. The I/O interface 745 is the communication path between these accessories and the processor 740.

The processor 740 is also coupled to the touchscreen 750 and the display 755. The operator of the UE 516 can use the touchscreen 750 to enter data into the UE 516. The display 755 may be a liquid crystal display, light emitting diode display, or other display capable of rendering text and/or at least limited graphics, such as from web sites.

The memory 760 is coupled to the processor 740. Part of the memory 760 could include a random access memory (RAM), and another part of the memory 760 could include a Flash memory or other read-only memory (ROM).

Although FIGURE. 7 illustrates one example of UE 516, various changes may be made to FIGURE. 7. For example, various components in FIGURE. 7 could be combined, further subdivided, or omitted and additional components could be added according to particular needs. As a particular example, the processor 740 could be divided into multiple processors, such as one or more central processing units (CPUs) and one or more graphics processing units (GPUs). Also, while FIGURE. 7 illustrates the UE 516 configured as a mobile telephone or smartphone, UEs could be configured to operate as other types of mobile or stationary devices.

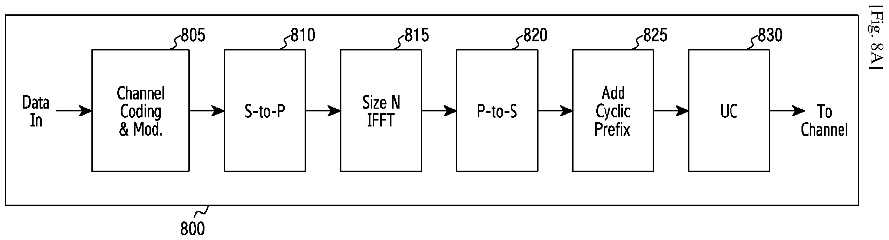

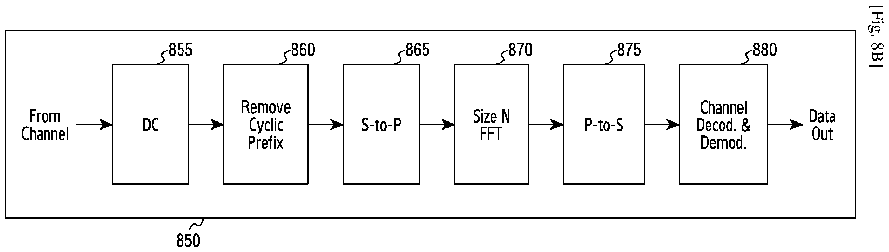

FIGURE. 8A is a high-level diagram of transmit path circuitry 800. For example, the transmit path circuitry 800 may be used for an orthogonal frequency division multiple access (OFDMA) communication. FIGURE. 8B is a high-level diagram of receive path circuitry 850. For example, the receive path circuitry 850 may be used for an orthogonal frequency division multiple access (OFDMA) communication. In FIGURES 8A and 8B, for downlink communication, the transmit path circuitry 800 may be implemented in a base station (eNB) 502 or a relay station, and the receive path circuitry 850 may be implemented in a user equipment (e.g. user equipment 516 of FIGURE. 5). In other examples, for uplink communication, the receive path circuitry 850 may be implemented in a base station (e.g. eNB 502 of FIGURE. 5) or a relay station, and the transmit path circuitry 800 may be implemented in a user equipment (e.g. user equipment 516 of FIGURE. 5).

Transmit path circuitry 800 comprises channel coding and modulation block 805, serial-to-parallel (S-to-P) block 810, Size N Inverse Fast Fourier Transform (IFFT) block 815, parallel-to-serial (P-to-S) block 820, add cyclic prefix block 825, and up-converter (UC) 830. Receive path circuitry 850 comprises down-converter (DC) 855, remove cyclic prefix block 860, serial-to-parallel (S-to-P) block 865, Size N Fast Fourier Transform (FFT) block 870, parallel-to-serial (P-to-S) block 875, and channel decoding and demodulation block 880.

At least some of the components in FIGURES 8A and 8B may be implemented in software, while other components may be implemented by configurable hardware or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It may be appreciated that in an alternate embodiment of the disclosure, the Fast Fourier Transform functions and the Inverse Fast Fourier Transform functions may easily be replaced by discrete Fouriertransform (DFT) functions and inverse discrete Fouriertransform (IDFT) functions,respectively. It may be appreciated that for DFT and IDFT functions,the value of the N variable may be any integer number(i.e., 1, 4, 3, 4, etc.), while for FFT and IFFT functions, the value of the N variable may be any integer number that is a power of two (i.e., 1, 2, 4, 8, 16, etc.).

In transmit path circuitry 800, channel coding and modulation block 805 receives a set of information bits, applies coding (e.g., LDPC coding) and modulates (e.g., quadrature phase shift keying (QPSK) or quadrature amplitude modulation (QAM)) the input bits to produce a sequence of frequency-domain modulation symbols. Serial-to-parallel block 810 converts (i.e., de-multiplexes) the serial modulated symbols to parallel data to produce N parallel symbol streams where N is the IFFT/FFT size used in BS 502 and UE 116. Size N IFFT block 815 then performs an IFFT operation on the N parallel symbol streams to produce time-domain outputsignals. Parallel-to-serial block 820 converts (i.e., multiplexes)the parallel time-domain outputsymbols from Size N IFFT block 815 to produce a serial time-domain signal. Add cyclic prefix block 825 then inserts a cyclic prefix to the time-domain signal. Finally, up-converter 830 modulates (i.e., up-converts) the outputof add cyclic prefix block 825 to RF frequency for transmission via a wireless channel. The signal may also be filtered at baseband before conversion to RF frequency.

The transmitted RF signal arrives at UE 516 after passing through the wireless channel, and reverse operations to those at eNB 502 are performed. Down-converter 855 down-converts the received signal to baseband frequency, and remove cyclic prefix block 860 removes the cyclic prefix to produce the serial time-domain baseband signal. Serial-to-parallel block 865 converts the time-domain baseband signal to parallel time-domain signals. Size N FFT block 870 then performs an FFT algorithm to produce N parallel frequency-domain signals. Parallel-to-serial block 875 converts the parallel frequency-domain signals to a sequence of modulated data symbols. Channel decoding and demodulation block 880 demodulates and then decodes the modulated symbols to recover the original input data stream.

Each of eNBs 501-503 may implement a transmit path that is analogous to transmitting in the downlink to user equipment 511-516 and may implement a receive path that is analogous to receiving in the uplink from user equipment 511-516. Similarly, each one of user equipment 511-516 may implement a transmit path corresponding to the architecture for transmitting in the uplink to eNBs 501-503 and may implement a receive path corresponding to the architecture for receiving in the downlink from eNBs 501-503.

Various embodiments of the present disclosure provides for a high-performance, scalability with respect to the number and geometry of transmit antennas, and a flexible CSI feedback (e.g., reporting) framework and structure for LTE enhancements when FD-MIMO with large two-dimensional antenna arrays is supported.To achieve high performance, more accurate CSI in terms MIMO channel is needed at the eNB especially for FDD scenarios. In this case, embodiments of the present disclosure recognize that the LTE specification precoding framework (PMI-based feedback) may need to be replaced. In this disclosure, properties of FD-MIMO are factored in for the present disclosure. For example, the use of closely spaced large 2D antenna arrays that is primarily geared toward high beamforming gain rather than spatial multiplexing along with relatively small angular spread for each UE. Therefore, compression or dimensionality reduction of the channel feedback in accordance with a fixed set of basic functions and vectors may be achieved. In another example, updated channel feedback parameters (e.g., the channel angular spreads) may be obtained at low mobility using UE-specific higher-layer signaling. In addition, a CSI reporting (feedback) may also be performed cumulatively.

Another embodiment of the present disclosure incorporates a CSI reporting method and procedure with a reduced PMI feedback. This PMI reporting at a lower rate pertains to long-term DL channel statistics and represents a choice of a group of precoding vectors recommended by a UE to an eNB. The present disclosure also includes a DL transmission method wherein an eNB transmits data to a UE over a plurality of beamforming vectors while utilizing an open-loop diversity scheme. Accordingly, the use of long-term precoding ensures that open-loop transmit diversity is applied only across a limited number of ports (rather than all the ports available for FD-MIMO, e.g., 64). This avoids having to supportexcessively high dimension for open-loop transmit diversity that reduces CSI feedback overhead and improves robustness when CSI measurement qualityis questionable.

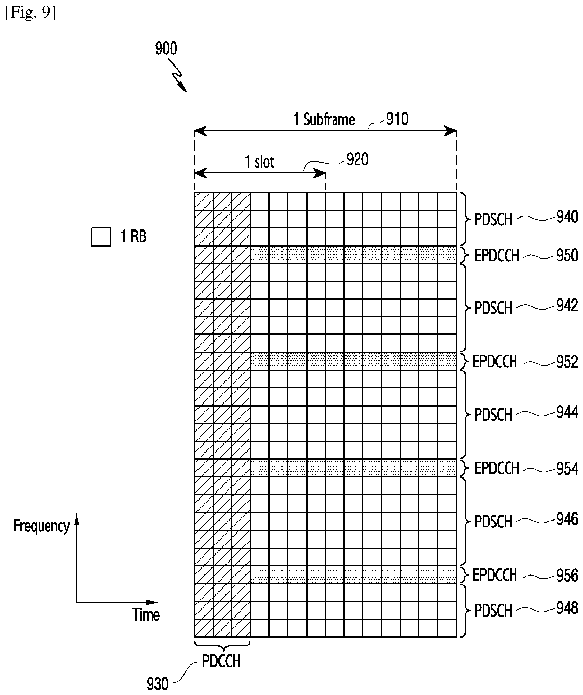

FIGURE. 9 illustrates an example structure for a DL subframe900 according to embodiments of the present disclosure. An embodiment of the DL subframe900 shown in FIGURE. 5 is for illustration only. Other embodiments may be used without departing from the scope of the present disclosure. The downlink subframe(DL SF) 910 includes two slots 920 and a total of $N_{symb}^{DL}$ symbols for transmitting of data information and downlink control information (DCI). The first $M_{symb}^{DL}$ SF symbols are used to transmit PDCCHs and other control channels 930 (not shown in FIGURE. 9). The remaining Z SF symbols are primarily used to transmit physical downlink shared channels (PDSCHs) 940, 942, 944, 946, and 948 or enhanced physical downlink control channels (EPDCCHs) 950, 952, 954, and 956. A transmission bandwidth (BW) comprises frequency resource units referred to as resource blocks (RBs). Each RB comprises either $N_{sc}^{RB}$ sub-carriersor resource elements (REs) (such as 12 Res). A unit of one RB over one subframeis referred to as a physical RB (PRB). A UE is allocated to $M_{PDSC}$ RBs for a total of $Z = O_F + \lfloor (n_{sO} + y \cdot N_{EPDCCH})/D \rfloor$ REs for a PDSCH transmission BW. An EPDCCH transmission is achieved in either one RB or multiple of RBs.

In TDD systems, an eNB can obtain downlink CSI using uplink channel sounding if channel reciprocity holds. Since the circuitry components of the transceivers may differ due to manufacturing variations, loose tolerances, temperature and aging, the coherency between transceivers is lost. To ensure and restore coherency among all transceivers, a calibration scheme is needed. Otherwise, the estimated downlink CSI based on UL SRS is not aligned with actual downlink channels. In an FD-MIMO system, the calibration circuits need to interconnect a large number of antennas, which makes it difficult to manufacture these interconnections with uniform high precision. Calibration circuits with insufficient phase accuracy may result in large residual errors and degraded beam steering performance. Furthermore,the calibration accuracy may vary across antennas, thus results in inconsistent beamforming performance among antennas.

The present disclosure addresses these challenges by introducing robust calibration methods for precoding and virtualization, precoding methods accounted for calibration accuracy and RF hardware performance. In some embodiments, number of antennas is set to be 32 for illustration purpose. Embodiments apply to any number of antennas.

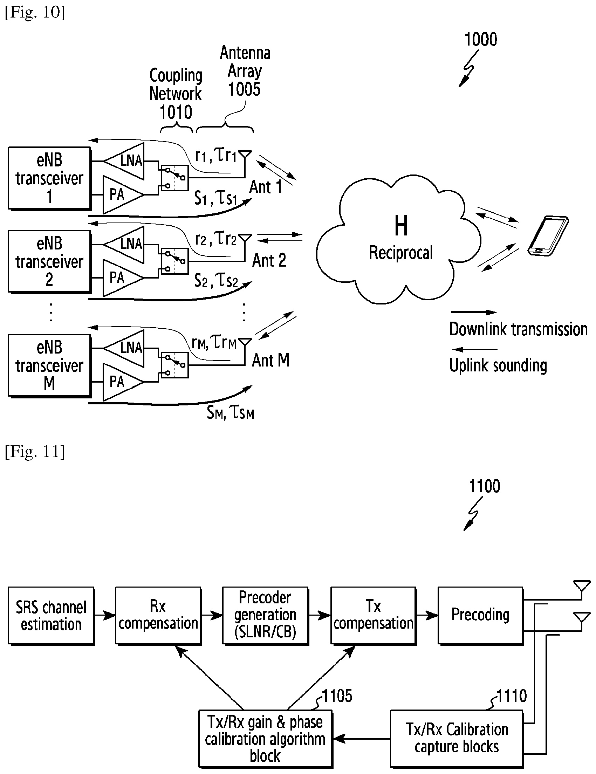

FIGURE. 10 illustrates an example channel mismatch 1000 in time division duplexing(TDD) system according to embodiments of the present disclosure. An embodiment of the channel mismatch 1000 in the TDD system shown in FIGURE. 10 is for illustration only. Other embodiments may be used without departing from the scope of the present disclosure. As shown in FIGURE. 10, the channel mismatch 1000 in TDD system comprises an antenna array 1005 and coupling network 1010.

Tx and Rx branches have different RF characteristics due to manufacture imperfection, filter mismatches, etc. A signal sent/received from different branches may have a different response. The responses can be represented by a linear time invariant system. There is no multipath for each branch, and only a single tap delay is introduced by the filtering, different wire length, etc. Therefore, the parameters to be measured and calibrated are determined: $r_i$ (complex Rx gain); $g_{ri}$ ($g_{ri}$=abs($r_i$)); $\Phi_{ri}$ ($\Phi_{ri}$ angle($r_i$)); $s_i$ (complex Tx gain); $g_{si}$ ($g_{si}$=abs($s_i$)); $\Phi_{si}$ ($\Phi_{si}$=angle($s_i$)); $t_{ri}$ (Rx group delay (fractional samples)); and $\tau_{si}$ (Tx group delay (fractional samples)).

In some embodiments of the first step of Rx calibration, a common transmitter sends a known sequence u[n] to all Rxs. After DAC, the analog outputis u(t), where u($nT_s$ )=u[n] at sampling timing, where $T_s$ is the DAC sampling rate (here assumed to be at baseband). Then, u(t) is up-converted into RF signal at the outputof the common transmitter: $s_0$u(t) exp(j2π$f_c$t), where $s_0$ represents the initial phase introduced by the LO, and gain and phase introduced by the common transmitter. Each path has a different delay, and for Rx i the group delay is $\tau_{ri}$. Such group delay is mainly introduced by the analog filters. For each path, the phase introduced by the coupling network is also different and such difference is caused by the mismatch of branches of the coupling network to different transceivers. Denote $\Phi_{ci}$ the phase from the common outputpoint of common transmitter to the coupler at receiver antenna i. The RF signal at Rx i is: $y_{RF,i}$(t) = $r_i s_0$u(t - $\tau_{ri}$) exp(j2π$f_c$(t - $\tau_{ri}$) + j$\Phi_{ci}$) + $n_i$(t) where $r_i$ captures the complex gain from coupler of the receiver i to the ADC and $n_i$(t) is addive noise. After down-converting, anti-aliasing low-pass filtering and ADC:

$$y_i[n] = r_i s_0 u\left[n - \frac{\tau_{ri}}{T_s}\right] \exp(j(\phi_{ci} - 2\pi f_c \tau_{ri})) + n_i[n]$$

where u[n - $\tau_{ri}$/$T_s$] shall be interpreted as a fractional sample delay. Note that the phase of LO in the down-converter at the receiver i is included in $r_i$.

In some embodiments of the second step of Rx calibration, after capturing, the signal is converted into frequency domain. FFT window starts at $n_0$ samples, which is assumed to be larger than the maximum path delay (to avoid junkdata at the beginning). Assuming the FFT size is N: FFT($y_i$) = FFT($y_i$ [$n_0$],···,$y_i$[N + $n_0$ - 1]) Note that $r_i s_0$ exp(j($\Phi_{ci}$ - 2π$f_c\tau_{ri}$)) is a constant independent of n. So, the frequency domain signal at subcarrier k is:

$$x_{ik} = r_i s_0 U[k] \exp\left( j\left(2\pi \frac{\left(n_0 - \frac{\tau_{ri}}{T_s}\right)k}{N} + \phi_{ci} - 2\pi f_c \tau_{ri}\right)\right) + n_{ik}$$,

$$x_{ik} = g_{ri} g_{s0} U[k] \exp\left( j\left(2\pi \frac{\left(n_0 - \frac{\tau_{ri}}{T_s}\right)k}{N} + \phi_{ci} + \phi_{ri} + \theta_{s0} - 2\pi f_c \tau_{ri}\right)\right) + n_{ik}$$

where U[k] is the DFT of [u[0],···,u[N - 1]], e.g., the frequency response at subcarrier k. Note that in the above equation the common group delay introduced by FFT windowing is $\frac{2\pi k n_0}{N}$. In some embodiments, U[k] is one SRS sequence.

In some embodiments of the third step of Rx calibration, equalization(remove SRS) is performed. After removal of U[k],

$$x'_{ir} = \frac{x_{ik}}{U[k]} = g_{ri} g_{s0} \exp\left( j\left(-2\pi \frac{k\tau_{ri}}{NT_s} + 2\pi \frac{kn_0}{N} + \phi_{ri} + \theta_{s0} + \phi_{ci} - 2\pi f_c \tau_{ri}\right)\right) + n_{ik}.$$

In some embodiments of the fourth step of Rx calibration, calibration is performed. In such embodiments, calibrate antenna i=2 to N w.r.t. antenna 1. The correction factor at subcarrier k (or RB k, as only 1 subcarrier is selected per RB) is

$$C^r_{ik} = \frac{x'_{1r}}{x'_{ir}} \approx \frac{g_{r1}}{g_{ri}} \exp\left( j\left(-2\pi \frac{k(\tau_{r1} - \tau_{ri})}{NT_s} + \phi_{r1} - \phi_{ri} + \phi_{c1} - \phi_{ci} - 2\pi f_c \tau_{r1} + 2\pi f_c \tau_{ri}\right)\right).$$

In such embodiments, Rx correction matrix for frequency k is $C_{rk} = \text{diag}(1, C_{2k}^r, \cdots, C_{32k}^r) = C_{rk}^a \cdot \Delta_1^c$ where $C_{rk}^a$ is a diagonal matrix with the ith diagonal element as $\frac{g_{r1}}{g_{ri}} \exp(j(-2\pi\frac{k(\tau_{r1}-\tau_{ri})}{NT_s} + \phi_{r1} - \phi_{ri} - 2\pi f_c\tau_{r1} + 2\pi f_c\tau_{ri})$ $\Delta_1^c$ is a diagonal matrix with the ith diagonal element as $\exp(j(\phi_{c1} - \phi_{ci}))$.

In some embodiments of step 1 for signal capture, each of the transmitters sends a known sequence u[n] to a common Rx. After DAC, the analog output is u(t). Then, RF signal before the common point of the common receiver is $s_iu(t - \tau_{si}) \exp(j2\pi f_c(t - \tau_{si}))$, where $s_i$ is a complex gain including initial phase introduced by the LO and other RF characteristics in transmitter i, $\tau_{si}$ is the delay introduced by the transmitter i. All the Txs start transmission at the same time stamp (e.g., the beginning of an OFDM symbol). The captured signal at the common Rx is: $y_{RF,i}(t) = s_ir_ou(t - \tau_{si}) \exp(j2\pi f_c(t - T_{si}) + \phi_{ci}) + n_i(t)$ where $r_o$ captures the complex response at the common receiver. After down-converting, anti-aliasing low-pass filtering and ADC: $y_i[n] = s_ir_ou[n - \tau_{si}/T_s] \exp(-j2\pi f_c\tau_{si} + \phi_{ci}) + n_i[n]$. Note that the phase of LO in the down-converter at the common receiver is included in $r_0$.

In some embodiments of step 2 in frequency domain, after captures, the signal is converted into frequency domain. FFT window starts at $n_0$ samples, which is assumed to be larger than the maximum path delay (to avoid junk data at the beginning). Assuming the FFT size is N: $FFT(y_i) = FFT((y_i[n_0],\cdots,y_i[N + n_0 - 1]))$. So, the frequency domain signal at subcarrier k is:

$$x_{ik} = r_0s_iU[k] \exp\left(j\left(2\pi\frac{\left(n_0-\frac{\tau_{si}}{T_s}\right)k}{N} + \phi_{ci} - 2\pi f_c\tau_{si}\right)\right) + n_{ik}, x_{ik} =$$

$$g_{si}g_{r0}U[k] \exp\left(j\left(2\pi\frac{\left(n_0-\frac{\tau_{si}}{T_s}\right)k}{N} + \phi_{ci} + \phi_{si} + \theta_{s0} - 2\pi f_c\tau_{si}\right)\right) + n_{ik}.$$

In some embodiments of step 3 for equalization (remove SRS). After removal of

$$[k] \; x_{is}' = \frac{x_{ik}}{U[k]} = g_{si}g_{r0} \exp\left(j\left(2\pi\frac{\left(n_0-\frac{\tau_{si}}{T_s}\right)k}{N} + \phi_{ci} + \phi_{si} + \theta_{s0} - 2\pi f_c\tau_{si}\right)\right) + n_{ik}.$$

In some embodiments of step 4 for calibration, calibrate antenna i=2 to N w.r.t. antenna 1. The correction factor at subcarrier k (or RB k, as only 1 subcarrier is selected per RB) is:

$$C_{ik}^s = \frac{x_{1s}'}{x_{is}'} \approx \frac{g_{si}}{g_{s0}} \exp\left(j\left(-2\pi\frac{k(\tau_{s1}-\tau_{si})}{NT_s} + \phi_{s1} - \phi_{si} + \phi_{c1} - \phi_{ci} - 2\pi f_c\tau_{s1} + 2\pi f_c\tau_{si}\right)\right).$$

Then, Tx correction matrix for frequency k is: $C_{sk} = \text{diag}(1, C_{2k}^s, \cdots, C_{32k}^s) = C_{sk}^a \cdot \Delta_1^c$ where $C_{sk}^a$ is a diagonal matrix with the ith diagonal element as $\frac{g_{si}}{g_{s0}} \exp(j(-2\pi\frac{k(\tau_{s1}-\tau_{si})}{NT_s} + \phi_{s1} - \phi_{si} - 2\pi f_c\tau_{s1} + 2\pi f_c\tau_{si}))$.

If the coupling network is well matched, $\Delta_{ji} = \phi_{cj} - \phi_{ci} \approx 0$ for all i and j. For example, the maximum absolute value of $\Delta_{ji}$ may be smaller than 5°, where $\vec{h}_{kp}$: uplink SRS channel estimate at RB k and UE p, apply Rx compensation: $\vec{h}_{kp}' = C_{rk}\vec{h}_{kp}$, calculate precoder $P_k$ (e.g., CB or SLNR) based on $\vec{h}_{kp}'$, and apply Tx compensation: $P_k' = C_{sk}P_k$. For open loop precoding, no Rx compensation is performed; only Tx compensation is needed.

In the mode of Tx/Rx joint calibration, a joint correction factor is used for a transceiver pair. For transceiver i and frequency k, $C_{ik} = \frac{C_{ik}^r}{C_{ik}^s}$ and the joint correction matrix for frequency k is $C_k = \text{diag}(1, C_{2k}, \cdots, C_{32k}) = \frac{C_{rk}}{C_{sk}} = \frac{C_{rk}^a}{C_{sk}^a}$, where $\vec{h}_{kp}$: uplink SRS channel estimate at RB k and UE p, apply

joint compensation: $\vec{h}'_{kp} = C_k \vec{h}_{kp}$, calculate precoder $P_k$ (e.g., CB or SLNR) based on $\vec{h}'_{kp}$, and joint compensation cannot be applied to open loop beamforming.

In some embodiments, gain and phase mismatch in coupling network and antenna occur because the distance between the point of coupling for different antenna elements and common measurement point cannot be perfectly matched. In some embodiments, phase mismatch among branches of coupling network may be occurred.

FIGURE. 11 illustrates an example separate transmit/receive (Tx/Rx) calibration 1100 according to embodiments of the present disclosure. An embodiment of the Tx/ Rx calibration 1100 shown in FIGURE. 11 is for illustration only. Other embodiments may be used without departing from the scope of the present disclosure. As shown in FIGURE. 11 the Tx/Rx calibration 1100 comprises a Tx/Rx gain & phase calibration algorithm block 1105 and a Tx/Rx calibration capture blocks 1110. Specifically, the Tx/Rx gain & phase calibration algorithm block 1105 connects with an Rx compression and Tx compression.

Joint compensation is equivalent to separate compensation with perfectly matched coupling network in advanced precoding algorithms such as signal to leakage and noise ratio (SLNR) algorithm, given gain is aligned (even) among all Tx and Rx channels. At frequency k, assume the channel matrix after SRS channel estimation: $H_{dl} = H_{L \times M}$ diag $(r_1 \exp(-j2\pi\Delta k\tau_{r1}),\cdots,r_M \exp(-j2\pi\Delta k\tau_{rM})) = HR_k$ where L is the number of UEs, and $\Delta$ is subcarrier spacing $(\Delta=1/T_sN)$. Ideally, the SLNR precoding is $P = \alpha H^H(\alpha^2I + HH^H)^{-1}$ where $\alpha$ can be any scalar while the precoding is equivalent and $\sigma^2$ is a scaling factor.

For separate Tx/Rx calibration and compensation with perfectly matched calibration network: the channel after Rx compensation is $H' = H_{dl}C_{rk} = r_1\exp(j\phi_{com})H$ where H is the actual channel and $\Phi_{com}$ is a common phase; precoding of SLNR is in the form of (the constant complex number $r_1$ does not affect the precoding and can be absorbed by $\sigma^2$):

$P_{1k} = H'^H(\sigma^2I + H'H'^H)^{-1}$; Tx compensation is: $P'_{1k} = C_{sk}P_{1k}$; and over the air signal is:

$$s_k = \text{diag}(s_1 \exp(-j2\pi\Delta k\tau_{r1}),\cdots,s_M \exp(-j2\pi\Delta k\tau_{rM}))P'_1x = Px.$$

For separate Tx/Rx calibration and compensation with any coupling network: te channel after Rx compensation is $H' = H_{dl}C_{rk} = r_1 H \Delta_1^c$ where H is the actual channel; precoding of SLNR is in the form of (the constant complex number $r_1$ does not affect the precoding and can be absorbed by $\sigma^2$):

$$P_{1k} = \Delta_1^{cH}H^H(\sigma^2I + H\Delta_1^c\Delta_1^{cH}H^H)^{-1} = \Delta_1^{cH}H^H(\sigma^2I + HH^H)^{-1};$$ Tx compensation is:

$$P'_{1k} = C_{sk}P_{1k} = C_{sk}^a \cdot \Delta_1^c\Delta_1^{cH}H^H(\sigma^2I + H\Delta_1^c\Delta_1^{cH}H^H)^{-1}, \quad P'_{1k} = C_{sk}^a \cdot H^H(\sigma^2I + H\Delta_1^c\Delta_1^{cH}H^H)^{-1};$$ and

over the air signal is: $$s_k = \text{diag}(s_1 \exp(-j2\pi\Delta k\tau_{r1}),\cdots,s_M \exp(-j2\pi\Delta k\tau_{rM}))P'_1x = Px.$$

For joint Tx/Rx calibration and compensation with any coupling network and perfect gain alignment: the channel after Rx compensation is $H' = H_{dl}C_k = r_1H(C_{sk}^a)^{-1}$ where H is the actual channel; precoding of SLNR is in the

form of: $P_{2k} = C_{sk}^{-aH}H^H(\sigma^2I + HC_{sk}^{-a}C_{sk}^{-aH}H^H)^{-1}, P_{2k} = C_{sk}^{-aH}H^H(\sigma^2I + HH^H)^{-1};$ and over the air signal is: $s_k = \text{diag}(s_1 \exp(-j2\pi\Delta k\tau_{s1}),\cdots,s_M \exp(-j2\pi\Delta k\tau_{sM}))P_{2k}x = Px.$

For simplicity, derivation in the aforementioned embodiment is based on single antenna UEs, nevertheless, extensions to multi-antenna UEs can be made via the same principles. The received signal at UE p is:

$$y_{kp} = \sqrt{G_{kp}}h_{kp}^H w_{kp}s_{kp} + \sqrt{G_{kp}}h_{kp}^H\Sigma_{i\neq p}w_{ki}s_{ki} + n_{kp}, p = 1,\ldots,L$$ where $h_{kp}$ is normalized channel for UE p at frequency k. Denote $\sigma_{kp}^2$ the variance of $n_{kp}$, i.e., receive noise power at UE p, the signal model used for SLNR precoding is $$y'_{kp} = \frac{y_{kp}}{\sigma_{kp}} = \sqrt{\frac{G_{kp}}{\sigma_{kp}^2}}h_{kp}^H w_{kp}s_{kp} + \sqrt{\frac{G_{kp}}{\sigma_{kp}^2}}h_{kp}^H\Sigma_{i\neq p}w_{ki}s_{ki} + n'_{pk}.$$ Denote the gain matrix $G_k$:

$$G_k = \text{diag}\left(\sqrt{\frac{G_{k1}}{\sigma_{k1}^2}},\cdots,\sqrt{\frac{G_{kL}}{\sigma_{kL}^2}}\right).$$ Then, the SLNR precoder for UE p is: $w_{kp} := \alpha_p \times$ the kth column of

$(\overline{H}_k(G_k^{-1} + \overline{H}_k^H \overline{H}_k)^{-1})$. If there is gain mismatch in calibration, then $G_k = G_k + \Delta G_k$.

In some embodiments of a two-step joint Tx/Rx calibration is devised to resolve challenges of: gain mismatch among different branches of the coupling network, and actual antenna gain in transmission or reception; and phase mismatch among different branches of coupling network.

Tx and Rx gains are compensated not using the coupling network, instead they are measured and compensated via offline measurements or external antennas. Denote measured the Tx and Rx gains as $G_{s,i}$ and $G_{r,i}$, where $i=1,...,M$.

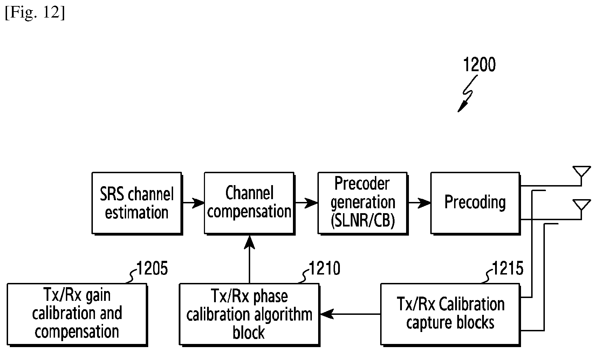

FIGURE. 12 illustrates an example two-step joint Tx/Rx calibration 1200 according to embodiments of the present disclosure. An embodiment of the two-step joint Tx/Rx calibration 1200 shown in FIGURE. 12 is for illustration only. Other embodiments may be used without departing from the scope of the present disclosure. As shown in FIGURE. 12, the two-step joint Tx/Rx calibration 1200 comprises a Tx/Rx gain calibration and compensation 1105, Tx/Rx phase calibration algorithm block 1110, and Tx/Rx calibration capture blocks 1115.

In some embodiments of step 1 signal capture, after down-converting, anti-alising low-pass filtering and ADC: $y_i[n] = r_i s_o u[n - \tau_{ri}/T_s] \exp(j(\phi_{ci} - 2\pi f_c \tau_{ri})) + n_i[n]$ where $u[n - \tau_{ri}/T_s]$ shall be interpreted as a fractional sample delay.

In some embodiments of step 2 frequency domain processing, after captures, the signal is converted into frequency domain. FFT window starts at $n_0$ samples, which is assumed to be larger than the maximum path delay (to avoid junkdata at the beginning). Assuming the FFT size is N: $FFT(y_i) = FFT(y_i[n_0],\cdots,y_i[Nib + n_0 - 1])$.

Note that $r_i s_o \exp(j(\phi_{ci} - 2\pi f_c \tau_{ri}))$ is a constant independent of n. So, the frequency domain signal at subcarrier k is:

$$x_{ik} = g_{ri}g_{s0}U[k] \exp\left(j\left(2\pi\frac{\left(n_0 - \frac{\tau_{ri}}{T_s}\right)k}{N} + \phi_{ci} + \phi_{ri} + \theta_{s0} - 2\pi f_c \tau_{ri}\right)\right) + n_{ik}$$

where U[k] is the DFT of [u[0],...,u[N-1]], e.g., the frequency response at subcarrier k.

In some embodiments of step 3 equalization(remove SRS). After removal of U[k], $x'_{ir} = \frac{x_{ik}}{U[k]} = g_{ri}g_{s0} \exp\left(j\left(-2\pi\frac{k\tau_{ri}}{NT_s} + 2\pi\frac{kn_0}{N} + \phi_{ri} + \theta_{s0} + \phi_{ci} - 2\pi f_c \tau_{ri}\right)\right) + n_{ik}$.

In some embodiments of step 4 find phase for each antenna at frequency k.

$$r_{ki} = \exp(\text{angle }(x'_{ir})) \approx \exp\left(j\left(-2\pi\frac{k\tau_{ri}}{NT_s} + 2\pi\frac{kn_0}{N} + \phi_{ri} + \theta_{s0} + \phi_{ci} - 2\pi f_c \tau_{ri}\right)\right)$$

where i=1,...,M.

In some embodiments of step 5 calibration, calibrate antenna i=2 to N w.r.t. antenna 1. The correction factor at subcarrier k (or RB k, as only 1 subcarrier is selected per RB) is: $C_{ik}^r = \frac{r_{k1}}{r_{ki}} = \exp(j(-2\pi\frac{k(\tau_{r1}-\tau_{ri})}{NT_s} + \phi_{r1} - \phi_{ri} + \phi_{c1} - \phi_{ci} - 2\pi f_c \tau_{r1} + 2\pi f_c \tau_{ri}))$, Rx correction matrix for frequency k is: $C_{rk} = \text{diag }(1, C_{2k}^r, \cdots, C_{32k}^r) = C_{rk}^a \cdot \Delta_1^c$ where $C_{rk}^a$ is a diagonal matrix with the ith diagonal element as $\exp(j(-2\pi\frac{k(\tau_{r1}-\tau_{ri})}{NT_s} + \phi_{r1} - \phi_{ri} - 2\pi f_c \tau_{r1} + 2\pi f_c \tau_{ri}))$ and $\Delta_1^c$ is a diagonal matrix with the ith diagonal element as $\exp(j(\phi_{c1} - \phi_{ci}))$.

In some embodiments of step 1 Signal capture, the captured signal at the common Rx is: $y_{RF,i}(t) = S_i r_o u(t - \tau_{si}) \exp(j2\pi f_c(t - \tau_{si}) + \phi_{ci}) + n_i(t)$ where $r_o$ captures the complex response at the common receiver. After down-converting, anti-alising low-pass filtering and ADC: $y_i[n] = s_i r_o u[n - \tau_{si}/T_s]\exp(-j2\pi f_c T_{si} + \phi_{ci}) + n_i[n]$.

In some embodiments of step 2 frequency domain processing, after captures, the signal is converted into frequency domain. FFT window starts at $n_0$ samples, which is assumed to be larger than the maximum path delay (to avoid junkdata at the beginning). Assuming the FFT size is N: $FFT(y_i) = FFT((y_i[n_0],\cdots, y_i[N + n_0 - 1]))$. So, the frequency domain signal at subcarrier k is:

$$x_{ik} = g_{si}g_{r0}U[k] \exp\left(j\left(2\pi\frac{\left(n_0 - \frac{\tau_{si}}{T_s}\right)k}{N} + \phi_{ci} + \phi_{si} + \theta_{s0} - 2\pi f_c \tau_{si}\right)\right) + n_{ik}.$$

In some embodiments of step 3 equalization(remove SRS). After removal of

$$U[k] \, x'_{is} = \frac{x_{ik}}{U[k]} = g_{si}g_{r0} \exp\left(j\left(2\pi \frac{\left(n_0 - \frac{\tau_{si}}{T_s}\right)k}{N} + \phi_{ci} + \phi_{si} + \theta_{s0} - 2\pi f_c \tau_{si}\right)\right) + n_{ik}.$$

In some embodiments of step 4 find phase for each antenna at frequency k,

$$s_{ki} = \exp(\text{angle } (x'_{is})) \approx \exp\left(j\left(-2\pi \frac{k\tau_{si}}{NT_s} + 2\pi \frac{kn_0}{N} + \phi_{si} + \theta_{r0} + \phi_{ci} - 2\pi f_c \tau_{si}\right)\right)$$

where i=1,...,M.

In some embodiments of step 5 calibration, calibrate antenna i=2 to N w.r.t. antenna 1. The correction factor at subcarrier k (or RB k, as only 1 subcarrier is selected per RB) is:

$$C^s_{ik} = \frac{s_{k1}}{s_{ki}} \approx \exp(j(-2\pi \frac{k(\tau_{s1} - \tau_{si})}{NT_s} + \phi_{s1} - \phi_{si} + \phi_{c1} - \phi_{ci} - 2\pi f_c \tau_{s1} + 2\pi f_c \tau_{si})).$$ Tx correction matrix for frequency k is: $C_{sk} = \text{diag } (1, C^s_{2k}, \cdots, C^s_{32k}) = C^a_{sk} \cdot \Delta^c_1$ where $C^a_{sk}$ is a diagonal matrix with the ith diagonal element as $\exp(j(-2\pi \frac{k(\tau_{s1} - \tau_{si})}{NT_s} + \phi_{s1} - \phi_{si} - 2\pi f_c \tau_{s1} + 2\pi f_c \tau_{si})).$

A joint correction factor is used for a transceiver pair. For transceiver i and frequency k, $C_{ik} = \frac{C^r_{ik}}{C^s_{ik}}$ and the joint correction matrix for frequency k is

$$C_k = \text{diag } (1, C_{2k}, \cdots, C_{32k}) = \frac{C_{rk}}{C_{sk}} = \frac{C^a_{rk}}{C^a_{sk}}.$$

The normalized channel for UE p at frequency k is $h_{kp}$. Then, apply joint compensation: $h^c_{kp} = C_k h_{kp}.$ Calculate precoder $P_k$ (e.g., CB or SLNR) based on $h^c_{kp}.$ Note that because $C_k$ only contains phase correction and all the elements have unit absolute value, $h^c_{kp}$ still have unit norm.

At frequency k, the channel matrix after SRS channel estimation is: $H_{dl} = H_{L \times M} \, \text{diag}(r_1 \exp(-j2\pi\Delta k\tau_{r1}), \cdots, r_M \exp(-j2\pi\Delta k\tau_{rM})) = H_{L \times M}$ R where L is the number of UEs. The above equation can be also written as:

$$H_{dl} = G_k \overline{H}_k \text{diag}(r_1, \cdots, r_M) \text{diag} \left(\exp(j(\phi_{r1} - 2\pi\Delta k\tau_{r1})), \cdots, \exp(j(\phi_{r1} - 2\pi\Delta k\tau_{rM}))\right).$$

Define the Rx antenna gain matrix as $G_{rk} = \text{diag}(g_{r1}, \ldots, g_{rM})$. The received channel after normalization is

$$G^{-1}_k H_{dl} = \overline{H}_k G_{rk} \text{diag} \left(\exp(j(\phi_{r1} - 2\pi\Delta k\tau_{r1})), \cdots, \exp(j(\phi_{r1} - 2\pi\Delta k\tau_{rM}))\right).$$

After the joint phase compensation being applied, the normalized channel is $\overline{H}'_k = \overline{H}_k G_{rk} \text{diag} \left(\exp(j(\phi_{r1} - 2\pi\Delta k\tau_{r1})), \cdots, \exp(j(\phi_{rM} - 2\pi\Delta k\tau_{rM}))\right) = \exp(j\phi_{com,1})\overline{H}_k G_{rk} \text{diag}(1, \cdots, \exp(j(2 - j2\pi\Delta k(\tau_{s1} - \tau_{sM}) - \phi_{s1} + \phi_{sM})))$ where $\phi_{com,1}$ is a common phase among all antennas. The SLNR precoding is

$$P_k = \overline{H}'^H_k (G^{-1}_k + \overline{H}'_k \overline{H}'^H_k)^{-1} = \overline{H}'^H_k (G^{-1}_k + \overline{H}_k G^2_{rk} \overline{H}^H_k)^{-1}.$$

Over the air signal is: $s_k = \text{diag}(s_1 \exp(-j2\pi\Delta k\tau_{s1}), \cdots, s_M \exp(-j2\pi\Delta k\tau_{sM}))P_k x = \exp(j\phi_{com,2}) G_{sk}\overline{H}^H_k(G^{-1}_k +$

$\overline{H}_k G_{rk}^2 \overline{H}_k^H )^{-1} x$ where $\phi_{com,2}$ is a common phase among all antennas and $G_{sk} = \text{diag}(g_{s1}, \cdots, g_{sM})$. Note that Tx and Rx gains are calibrated separately, that is $G_{sk} = aI$ and $G_{rk} = bI.$ So $s_k = \frac{\exp(j\phi_{com,2})a}{b^2} \overline{H}_k^H \big( (b^2 G_k^c)^{-1} + \overline{H}_k \overline{H}_k^H \big)^{-1} x.$

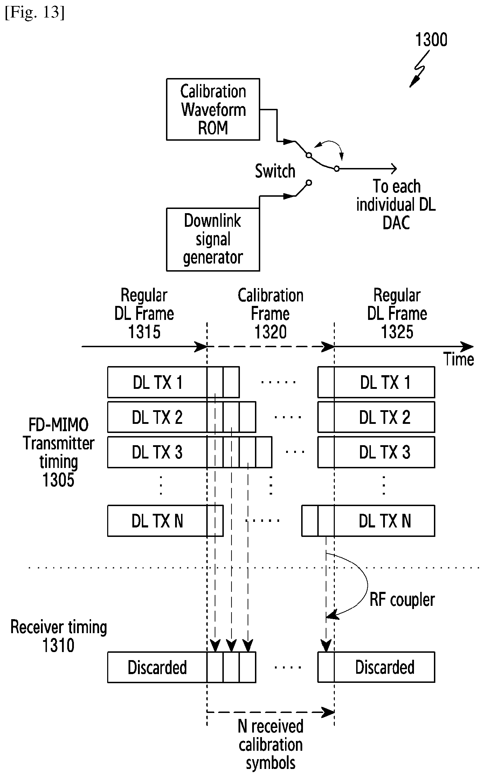

FIGURE. 13 illustrates an example Tx phase calibration 1300 according to embodiments of the present disclosure. An embodiment of the Tx phase calibration 1300 shown in FIGURE. 13 is for illustration only. Other embodiments may be used without departing from the scope of the present disclosure. As shown in FIGURE. 13, the Tx phase calibration 1300 comprises a FD-MIMO transmitter timing 1305 and a receiver timing 1310. In each transmitter and receiver timing, a regular downlink frame 1315 is converted to a calibration frame 1320, and then the calibration frame 1320 is converted into the regular downlink frame 1325.

Tx calibration block diagram and procedure are illustrated for a 32 Tx antenna system as shown in FIGURE. 13. 32 Tx sends calibration signal sequentially in 32 OFDM symbols. Signals are captured by calibration Rx with precise timing. Captured signals are converted into frequency domain and fed to calibration algorithm block.

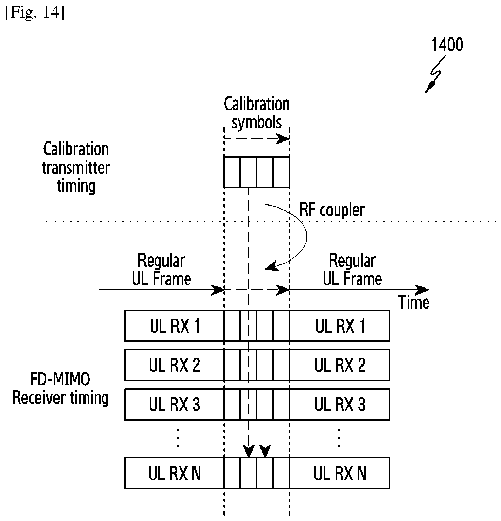

FIGURE. 14 illustrates an example Rx phase calibration 1400 according to embodiments of the present disclosure. An embodiment of the Rx phase calibration 1400 shown in FIGURE. 14 is for illustration only. Other embodiments may be used without departing from the scope of the present disclosure.

Rx calibration block diagram and procedure are illustrated for a 32 Rx antenna system in FIGURE. 14. 32 Rx receives the calibration signal at the same time. Each Rx converts its captured signal into frequency domain and fed into calibration algorithm block.

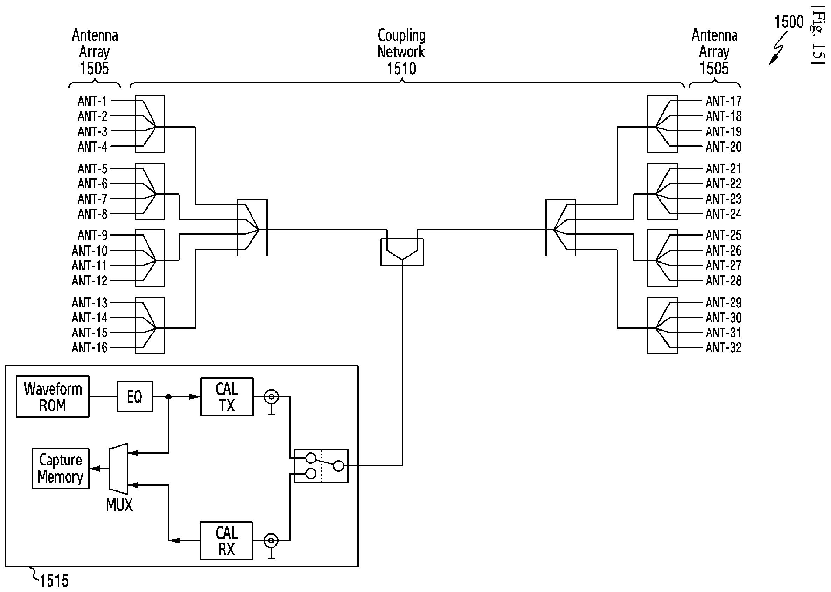

FIGURE. 15 illustrates an example coupling network 1500 according to embodiments of the present disclosure. An embodiment of the coupling network 1500 shown in FIGURE. 15 is for illustration only. Other embodiments may be used without departing from the scope of the present disclosure. As shown in FIGURE. 15, the network 1500 comprises a coupling network 1510 and an antenna array 1505, and is connected to a calibration transceiver 1515.

In some embodiments, coherent precoding requires high precision calibration on all antennas in array 1505 and can be attained by joint calibration via calibration transceiver 1515. However, virtualization requires Tx calibrations but with a few antennas. In some embodiments, hybrid calibration is designed to relax the design requirement for coupling network and save cost, meanwhile satisfying the precoding and antenna virtualization performance. In hybrid calibration, part of the coupling network 1500 is designed with high precision for Tx virtualization calibration purpose, while part of the coupling network 1500 can be any precision.

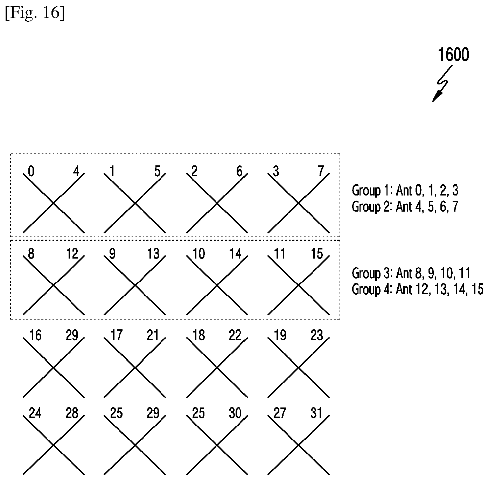

FIGURE. 16 illustrates an example antenna grouping 1600 in hybrid calibration according to embodiments of the present disclosure. An embodiment of the antenna grouping 1600 shown in FIGURE. 16 is for illustration only. Other embodiments may be used without departing from the scope of the present disclosure. As shown in FIGURE. 16, there are 4 groups of antennas where within each group the antennas are connected via a high precision 4-to-1 combiner. So after calibration, the phases of antennas within a group are well aligned. Among groups and other antennas, it is not necessarily true that the combiners have high precision so that the phases of these antennas may not be well aligned after calibration.

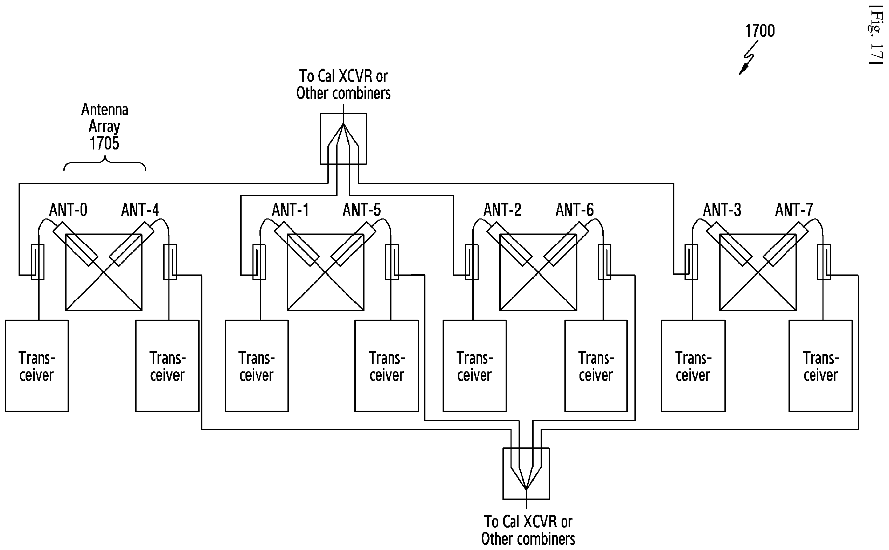

FIGURE. 17 illustrates an example coupling network 1700 in hybrid calibration according to embodiments of the present disclosure. An embodiment of the coupling network 1700 shown in FIGURE. 17 is for illustration only. Other embodiments may be used without departing from the scope of the present disclosure. As shown in FIGURE. 17, a corresponding coupling work is illustrated, which first connects antennas within a same group and then connects among groups. A shown in FIGURE. 17, the coupling network 1700 comprises an antenna array 1705.

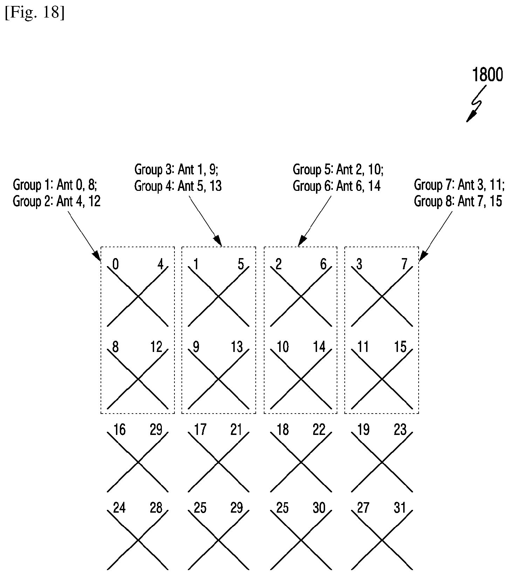

FIGURE. 18 illustrates example antenna groups 1800 for open loop beamforming and virtualization according to embodiments of the present disclosure. An embodiment of the antenna groups 1800 for open loop beamforming and virtualization shown in FIGURE. 18 is for illustration only. Other embodiments may be used without departing from the scope of the present disclosure.

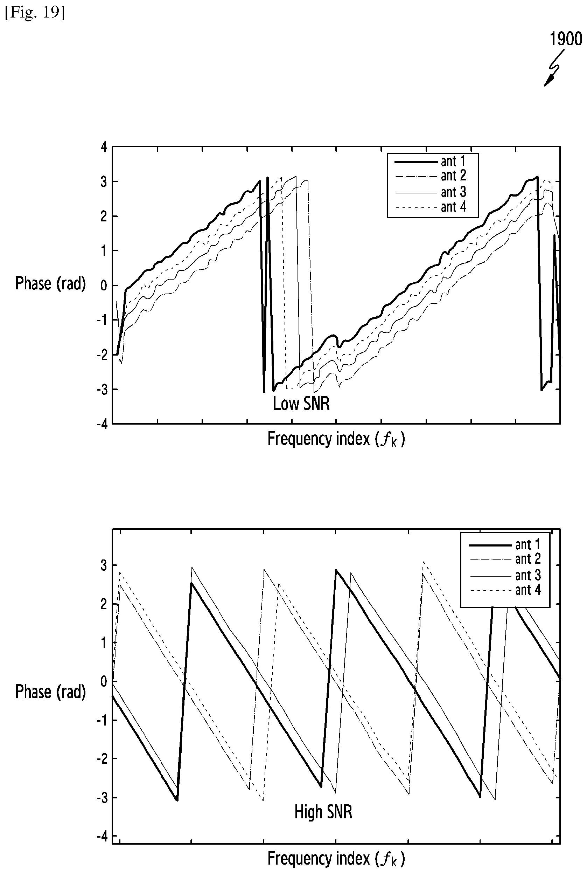

FIGURE. 19 illustrates example simulation results 1900 according to embodiments of the present disclosure. An embodiment of the simulation results 1900 shown in FIGURE. 19 is for illustration only. Other embodiments may be used without departing from the scope of the present disclosure.

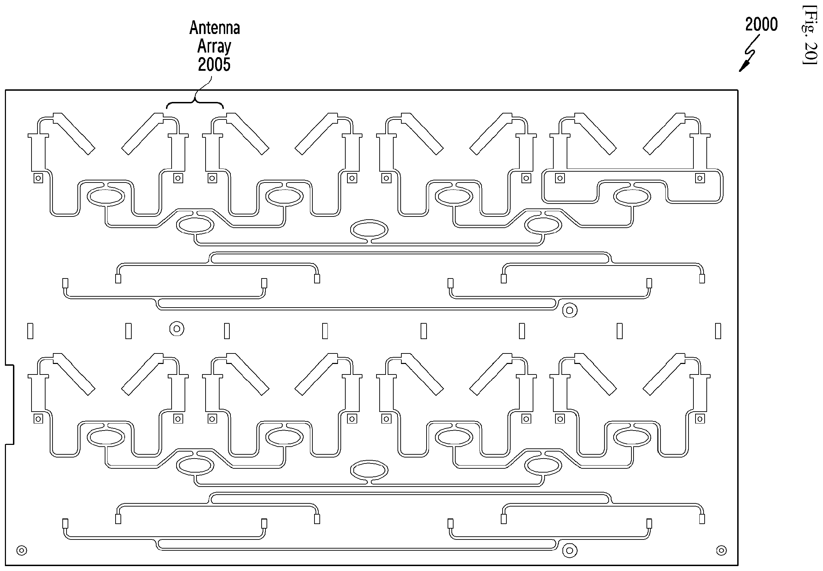

FIGURE. 20 illustrates another example coupling network 2000 according to embodiments of the present disclosure. An embodiment of the coupling network 2000 shown in FIGURE. 20 is for illustration only. Other embodiments may be used without departing from the scope of the present disclosure. As shown in FIGURE. 2000, the coupling network 2000 comprises an antenna array 2005.

In the exemplary hybrid calibration, 8 antenna groups may be used for open loop beamforming or antenna virtualization, where each group consists of 4 antennas in a column with the same polarization direction. Each of the 8 group of antennas may be regarded as an individual antenna in the open loop operation.

In some embodiments, the precoding (e.g., SLNR or MMSE precoding) can be represented by the format of P

$= \alpha H^H(\Sigma + HH^H)^{-1}$ where $\Sigma = \text{diag}(\sigma_1, \cdots, \sigma_K)$ is a diagonal matrix called regularization matrix. The diagonal elements in $\Sigma$ are non-negative and the relative value represents some weighting of different UEs' interference level. In one embodiment, each of the diagonal element in $\Sigma$ is the inverse of the receive SNR at the corresponding UE.

In some embodiments, the calibration SNRs are accounted to improve the precoding performance. For example, channels of some antennas may be measured with high SNR, however, due to the deficiency of the calibration circuit connected to these antennas, these antennas have bad calibration accuracy. Therefore, these antennas shall not be used to beamforming/precoding. In conventional precoding algorithms, only channel SNRs are accounted and therefore these channels will be heavily used. In the embodiment, the channel SNR will be scaled by calibration SNR to avoid such misalignment. In another embodiment, the precoding is represented as:

$P = \alpha H^H(\Sigma + HDH^H)^{-1}$ where $D = \text{diag}(d_1, \cdots, d_K)$ is a diagonal matrix introduced to capture the RF quality of antennas.

For example, antenna 1 has very high noise or the calibration accuracy is very low, then one can set $d_1$ to be a relatively small number comparing to $d_i$, $i \neq 1$. In this case, the antenna 1 can have less weight or even effectively removed from the precoding design. In one embodiment, denote the calibration SNR (accuracy) for all antennas to be $\rho_{ci}$, where $i=1...M$. Then, $D$ can be set to the relative calibration SNR:

$$D = \frac{\text{diag}(\rho_1, \cdots, \rho_M)}{\max_i \rho_{ci}}.$$

In some embodiments, if the calibration SNR $\rho_{ci}$ is smaller than a certain threshold $\rho\, c_0$, the $\rho_{ci}=0$; otherwise,

$$\rho_{ci} = \begin{cases} 1, \text{if } \rho_{ci} \geq \rho_{c0}. \\ 0, \text{if } \rho_{ci} < \rho_{c0} \end{cases}$$

$\rho_{ci}=1$. In other words,

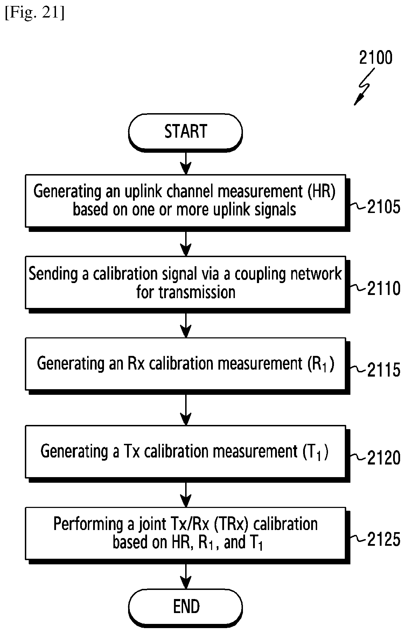

FIGURE. 21 illustrates an example flow chart of a method 2100 for calibration and array operation according to embodiments of the present disclosure, as may be performed by a base station. An embodiment of the flow chart the method 2100 shown in FIGURE. 21 is for illustration only. Other embodiments may be used without departing from the scope of the present disclosure. As shown in FIGURE. 21, the method begins at step 2105. In step 2105, the method 2100 generates an uplink channel measurement (HR) based on one or more uplink signals received via an antenna array comprising a plurality of antennas. In some embodiments, the method 2100 generates a downlink channel estimate (HT) based on an equation of $HRR_1^{-1}T_1 = HT$.

Next, the method in step 2110 send a calibration signal via a coupling network for transmission by each of the antennas in the antenna array. In some embodiments, the coupling network is connected to the antenna array that includes 32 antennas. In such embodiments, the coupling network comprises a multiple levels of layering structure including an equalizer, a multiplexer, a capture memory, and a waveform memory.

Subsequently,in step 2115, the method 2100 generates an Rx calibration measurement ($R_1$) based on the one or more uplink signals received via both the antenna array and the coupling network. In such embodiments, the $R_1$ comprises a product of an Rx array response (R) for a response of an Rx array comprising the plurality of antennas and a coupling network response (Ec) for a response of the coupling network. In such embodiments, the R, the Ec, and the T comprise a diagonal matrix, respectively. In some embodiments, the calibration signal is captured based on a sampling time. In such embodiments, the captured calibration signals for an antenna i and a frequency $f_k$ are determined by an equation given by:

$y_{ki} = a \exp(2\pi f_k \tau_i + \Phi_i) + n_{ki}$, $k = 1, ..., K$ where a is a calibration path gain and $n_{ki}$ is a noise.

Subsequently,the method 2100, in step 2120, generates a Tx calibration measurement ($T_1$) based on receipt of the calibration signal from each of the antennas via the coupling network. Finally, the method 2100 in step 2125 performs a joint Tx/Rx (TRx) calibration based on HR, $R_1$ and $T_1$. In such embodiments, the $T_1$ comprises a product of a Tx array response (T) for a response of an Tx array comprising the plurality of antennas and the Ec. In some embodiments, the method 2100 computes a zero-forcing (ZF) precoder based on an equation of (HT). In some embodiments, the TRx calibration is performed based on a calibration frame including 10 subframeseach of which includes 1 millisecond long.

Methods according to embodiments stated in claims and/or specifications of the present disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which is accessible through communication networks such as the Internet, Intranet, local area network (LAN), wide area network (WAN), and storage area network (SAN), or a combination thereof. Such a storage device may access the electronic device via an external port. Further, a separate storage device on the communication network may access a portable electronic device.

In the above-described detailed embodiments of the present disclosure, a component included in the present disclosure is expressed in the singular or the plural according to a presented detailed embodiment. However, the singular form or plural form is selected for convenience of description suitable for the presented situation, and various embodiments of the present disclosure are not limited to a single element or multiple elements thereof. Further, either multiple elements expressed in the description may be configured into a single element or a single element in the description may be configured into multiple elements.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, butshould be defined by the appended claims.

Although the present disclosure has been described with an exemplary embodiment, various changes and modifications may be suggested to one skilled in the art. It is intended that the present disclosure encompass such changes and modifications as fall within the scope of the appended claims.

**Claims**

1.  An apparatus in a wireless communication system, the apparatus comprising:

    an antenna array (605a-n, 1005, 1505, 1705) comprising a plurality of antennas;
    a transceiver array (610a-n) comprising a plurality of transceivers electrically connected to one or more of the antennas, respectively;
    a coupling network (640, 1010, 1500, 1700) electrically connected to each of the transceivers;
    a calibration transceiver (645, 1515) electrically connected to each of the transceivers in the transceiver array (610a-n) via the coupling network (640, 1010, 1500, 1700) at each antenna, the calibration transceiver (645, 1515) including:

       a calibration transmitter, Tx, configured to transmit a first calibration signal via the coupling network (640, 1010, 1500, 1700), and
       a calibration receiver, Rx, configured to receive a second calibration signal based on the first calibration signal, that was transmitted by the transceiver array (610a-n) in a time division duplex, TDD, pattern via the coupling network (640, 1010, 1500, 1700),
       wherein the calibration transceiver (645, 1515) is configured to:

          generate an Rx calibration measurement, $R_1$, based on the first calibration signal received by the transceiver array (610a-n) via the coupling network (640, 1010, 1500, 1700); and
          generate a Tx calibration measurement, $T_1$, based on receipt of the second calibration signal by the calibration receiver via the coupling network (640, 1010, 1500, 1700); and
          at least one processor (625) configured to perform a joint Tx/Rx, TRx, calibration based on HR, Ri, and $T_1$, where H is a channel response in air interface, R is a channel response of receivers in transceiver array (610a-n), wherein to perform the joint TRx calibration, the at least one processor is configured to generate a downlink channel estimate, HT, based on an equation of $HRR_1^{-1}T_1 = HT$.

2.  The apparatus of Claim 1, wherein the $R_1$ comprises a product of the channel response of the receivers in the transceiver array, R, and a channel response of the coupling network, $E_c$, and wherein the $T_1$ comprises a product of a channel response of transmitters in the transceiver array, T, and the channel response of the coupling network, $E_c$.

3. The apparatus of Claim 2, wherein the transceiver array, R, the coupling network, $E_c$, and the transceiver array, T, comprise a diagonal matrix, respectively.

4. The apparatus of Claim 3, wherein the transceiver array, R, is a diagonal matrix as given by R=diag($g_{ri}$exp(j$\Phi_{ri}$)) where gri and $\Phi_{ri}$ are a magnitude and a phase response of the receivers in the transceiver array (610a-n), respectively.

5. The apparatus of Claim 3, wherein the transceiver array, T, is a diagonal matrix as given by T=diag($g_{ti}$exp(j$\Phi_{ti}$)) where $g_{ti}$ and $\Phi_{ti}$ are a magnitude and a phase response of the transmitters in the transceiver array (610a-n), respectively.

6. The apparatus of Claim 3, wherein the coupling network, $E_c$, is a diagonal matrix as given by $E_c$=diag($g_{ci}$exp(j$\Phi_{ci}$)) where $g_{ci}$ and $\Phi_{ci}$ are a magnitude and a phase response of channels in the coupling network (640, 1010, 1500, 1700), respectively.

7. The apparatus of Claim 1, wherein the at least one processor (625) is further configured to compute a precoder based on estimation of downlink channel state information, DL CSI.

8. The apparatus of Claim 1, wherein the coupling network (640, 1010, 1500, 1700) is connected to the transceiver array (610a-n) that includes multiple transceivers and the antenna array (605a-n, 1005, 1505, 1705) that includes multiple antennas at antenna ports.

9. The apparatus of Claim 1, wherein the Rx calibration is computed based on the receivers in the transceiver array (610a-n) capturing the first calibration signal simultaneously, and wherein a Tx calibration measurement is computed based on the calibration receiver receiving the second calibration signal in a one by one time pattern from transmitters in the transceiver array (610a-n).

10. A method for operating an apparatus in a wireless communication system, the method comprising:

   transmitting, by a calibration transmitter, Tx, a first calibration signal via a coupling network (640, 1010, 1500, 1700) that is electrically connected to each transceiver in a transceiver array (610a-n), the transceiver array (610a-n) comprising a plurality of transceivers electrically connected to one or more of a plurality of antennas, respectively, in an antenna array (605a-n, 1005, 1505, 1705);
   receiving, by a calibration receiver, Rx, a second calibration signal, based on the first calibration signal, that was transmitted by the transceiver array (610a-n) in a time division duplex, TDD, pattern via the coupling network (640, 1010, 1500, 1700), the calibration receiver and calibration transmitter included in a calibration transceiver (645) that is electrically connected to each of the transceivers in the transceiver array (610a-n) via the coupling network (640, 1010, 1500, 1700) at each antenna;
   generating an Rx calibration measurement, Ri, based on the first calibration signal received by the transceiver array (610a-n) via the coupling network (640, 1010, 1500, 1700);
   generating a Tx calibration measurement, $T_1$, based on receipt of the second calibration signal by the calibration receiver via the coupling network (640, 1010, 1500, 1700)
   performing a joint Tx/Rx, TRx, calibration based on HR, Ri, and $T_1$, where H is a channel response in air interface, R is a channel response of receivers in transceiver array (610a-n); and
   generating a downlink channel estimate, HT, based on an equation of $HRR_1^{-1}T_1 = HT$.

11. The method of Claim 10, wherein the $R_1$ comprises a product of the channel response of the receivers in the transceiver array, R, and a channel response of the coupling network, $E_c$, and wherein the $T_1$ comprises a product of a channel response of transmitters in the transceiver array, T, and the channel response of the coupling network, $E_c$.

12. The method of Claim 11, wherein the transceiver array, R, the coupling network, $E_c$, and the transceiver array, T, comprise a diagonal matrix, respectively.

13. The method of Claim 12, wherein the transceiver array, R, is a diagonal matrix as given by R=diag($g_{ri}$exp(j$\Phi_{ri}$)) where $g_{ri}$ and $\Phi_{ri}$ are a magnitude and a phase response of the receivers in the transceiver array (610a-n), respectively.

**14.** The method of Claim 12, wherein the transceiver array, T, is a diagonal matrix as given by $T=\text{diag}(g_{ti}\exp(j\Phi_{ti}))$ where $g_{ti}$ and $\Phi_{ti}$ are a magnitude and a phase response of the transmitters in the transceiver array (610a-n), respectively.

**15.** The method of Claim 12, wherein the coupling network, $E_c$ is a diagonal matrix as given by $E_c=\text{diag}(g_{ci}\exp(j\Phi_{ci}))$ where $g_{ci}$ and $\Phi_{ci}$ are a magnitude and a phase response of channels in the coupling network (640, 1010, 1500, 1700), respectively.


## Patentansprüche

**1.** Vorrichtung in einem drahtlosen Kommunikationssystem, wobei die Vorrichtung umfasst:

ein Antennen-Array (605a-n, 1005, 1505, 1705), das mehrere Antennen umfasst;
ein Sendeempfänger-Array (610a-n), das mehrere Sendeempfänger umfasst, die jeweils elektrisch mit einer oder mehreren der Antennen verbunden sind;
ein Koppelnetz (640, 1010, 1500, 1700), das elektrisch mit jedem der Sendeempfänger verbunden ist;
einen Kalibrierungssendeempfänger (645, 1515), der elektrisch mit jedem der Sendeempfänger in dem Sendeempfänger-Array (610a-n) über das Koppelnetz (640, 1010, 1500, 1700) an jeder Antenne verbunden ist, wobei der Kalibrierungssendeempfänger (645, 1515) Folgendes enthält:

einen Kalibrierungssender, Tx, der dazu konfiguriert ist, ein erstes Kalibrierungssignal über das Koppelnetz (640, 1010, 1500, 1700) zu übertragen, und
einen Kalibrierungsempfänger, Rx, der dazu konfiguriert ist, ein zweites Kalibrierungssignal auf Grundlage des ersten Kalibrierungssignals zu empfangen, das durch das Sendeempfänger-Array (610a-n) in einem Muster gemäß einem Zeitduplexverfahren, TDD, über das Koppelnetz (640, 1010, 1500, 1700) übertragen wurde;
wobei der Kalibrierungssendeempfänger (645, 1515) konfiguriert ist zum:

Erzeugen einer Rx-Kalibrierungsmessung, $R_1$, auf Grundlage des ersten Kalibrierungssignals, das durch das Sendeempfänger-Array (610a-n) über das Koppelnetz (640, 1010, 1500, 1700) empfangen wird; und
Erzeugen einer Tx-Kalibrierungsmessung, $T_1$, auf Grundlage des Empfangs des zweiten Kalibrierungssignals durch den Kalibrierungsempfänger über das Koppelnetz (640, 1010, 1500, 1700); und
mindestens einen Prozessor (625), der dazu konfiguriert ist, eine gemeinsame Tx/Rx-, TRx-, Kalibrierung auf Grundlage von HR, $R_1$ und $T_1$ durchzuführen, wobei H eine Kanalantwort in einer Luftschnittstelle ist, R eine Kanalantwort von Empfängern in dem Sendeempfänger-Array (610a-n) ist, wobei zum Durchführen der gemeinsamen TRx-Kalibrierung der mindestens eine Prozessor dazu konfiguriert ist, eine Downlink-Kanalschätzung, HT, auf Grundlage einer Gleichung von $HRR_1^{-1}T_1 = HT$ zu erzeugen.

**2.** Vorrichtung nach Anspruch 1, wobei die $R_1$ ein Produkt aus der Kanalantwort der Empfänger in dem Sendeempfänger-Array, R, und einer Kanalantwort des Koppelnetzes, $E_c$, umfasst und wobei die $T_1$ ein Produkt aus einer Kanalantwort von Sendern in dem Sendeempfänger-Array, T, und der Kanalantwort des Koppelnetzes, $E_c$, umfasst.

**3.** Vorrichtung nach Anspruch 2, wobei das Sendeempfänger-Array, R, das Koppelnetz, $E_c$, und das Sendeempfänger-Array, T, jeweils eine Diagonalmatrix umfassen.

**4.** Vorrichtung nach Anspruch 3, wobei das Sendeempfänger-Array, R, eine Diagonalmatrix ist, wie durch $R=\text{diag}(g_{ri}\exp(j\Phi_{ri}))$ angegeben, wobei gri und $\Phi_{ri}$ ein Betrag bzw. eine Phasenantwort der Empfänger in dem Sendeempfänger-Array (610a-n) sind.

**5.** Vorrichtung nach Anspruch 3, wobei das Sendeempfänger-Array, T, eine Diagonalmatrix ist, wie durch $T=\text{diag}(g_{ti}\exp(j\Phi_{ti}))$ angegeben, wobei $g_{ti}$ und $\Phi_{ti}$ ein Betrag bzw. eine Phasenantwort der Sender in dem Sendeempfänger-Array (610a-n) sind.

**6.** Vorrichtung nach Anspruch 3, wobei das Koppelnetz, $E_c$, eine Diagonalmatrix ist, wie durch $E_c=\text{diag}(g_{ci}\exp(j\Phi_{ci}))$ angegeben, wobei $g_{ci}$ und $\Phi_{ci}$ ein Betrag bzw. eine Phasenantwort von Kanälen in dem Koppelnetz (640, 1010, 1500, 1700) sind.

**7.** Vorrichtung nach Anspruch 1, wobei der mindestens eine Prozessor (625) ferner dazu konfiguriert ist, einen Vorcodierer auf Grundlage einer Schätzung von Downlink-Kanalzustandsinformation, DL-CSI, zu berechnen.

**8.** Vorrichtung nach Anspruch 1, wobei das Koppelnetz (640, 1010, 1500, 1700) mit dem Sendeempfänger-Array (610a-n), das mehrere Sendeempfänger enthält, und dem Antennen-Array (605a-n, 1005, 1505, 1705), das mehrere Antennen enthält, an den Antennenanschlüssen verbunden ist.

**9.** Vorrichtung nach Anspruch 1, wobei die Rx-Kalibrierung auf Grundlage der Empfänger in dem Sendeempfänger-Array (610a-n) berechnet wird, die das erste Kalibrierungssignal gleichzeitig erfassen, und wobei eine Tx-Kalibrierungsmessung auf Grundlage des Kalibrierungsempfängers berechnet wird, der das zweite Kalibrierungssignal in einem Zeitmuster von einzeln aufeinanderfolgenden Sendern in dem Sendeempfänger-Array (610a-n) empfängt.

**10.** Verfahren zum Betreiben einer Vorrichtung in einem drahtlosen Kommunikationssystem, wobei das Verfahren umfasst:

Übertragen, durch einen Kalibrierungssender, Tx, eines ersten Kalibrierungssignals über ein Koppelnetz (640, 1010, 1500, 1700), das elektrisch mit jedem Sendeempfänger in einem Sendeempfänger-Array (610a-n) verbunden ist, wobei das Sendeempfänger-Array (610a-n) mehrere Sendeempfänger umfasst, die elektrisch jeweils mit einer oder mehreren von mehreren Antennen in einem Antennen-Array (605a-n, 1005, 1505, 1705) verbunden sind;

Empfangen, durch einen Kalibrierungsempfänger, Rx, eines zweiten Kalibrierungssignals auf Grundlage des ersten Kalibrierungssignals, das durch das Sendeempfänger-Array (610a-n) in einem Muster gemäß einem Zeitduplexverfahren, TDD, über das Koppelnetz (640, 1010, 1500, 1700), den Kalibrierungsempfänger und den Kalibrierungssender übertragen wurde, die in einem Kalibrierungssendeempfänger (645) enthalten sind, der elektrisch mit jedem der Sendeempfänger in dem Sendeempfänger-Array (610a-n) über das Koppelnetz (640, 1010, 1500, 1700) an jeder Antenne verbunden ist;

Erzeugen einer Rx-Kalibrierungsmessung, Ri, auf Grundlage des ersten Kalibrierungssignals, das durch das Sendeempfänger-Array (610a-n) über das Koppelnetz (640, 1010, 1500, 1700) empfangen wird;

Erzeugen einer Tx-Kalibrierungsmessung, $T_1$, auf Grundlage des Empfangs des zweiten Kalibrierungssignals durch den Kalibrierungsempfänger über das Koppelnetz (640, 1010, 1500, 1700);

Durchführen einer gemeinsamen Tx/Rx-, TRx-, Kalibrierung auf Grundlage von HR, $R_1$ und $T_1$, wobei H eine Kanalantwort in einer Luftschnittstelle ist, R eine Kanalantwort von Empfängern in einem Sendeempfänger-Array (610a-n) ist; und

Erzeugen einer Downlink-Kanalschätzung, HT, auf Grundlage einer Gleichung von $HRR_1^{-1}T_1 = HT$.

**11.** Verfahren nach Anspruch 10, wobei die $R_1$ ein Produkt aus der Kanalantwort der Empfänger in dem Sendeempfänger-Array, R, und einer Kanalantwort des Koppelnetzes, $E_c$, umfasst und wobei die $T_1$ ein Produkt aus einer Kanalantwort der Sender in dem Sendeempfänger-Array, T, und der Kanalantwort des Koppelnetzes, $E_c$, umfasst.

**12.** Verfahren nach Anspruch 11, wobei das Sendeempfänger-Array, R, das Koppelnetz, $E_c$, und das Sendeempfänger-Array, T, jeweils eine Diagonalmatrix umfassen.

**13.** Verfahren nach Anspruch 12, wobei das Sendeempfänger-Array, R, eine Diagonalmatrix ist, wie durch $R=\text{diag}(g_{ri}\exp(j\Phi_{ri}))$ angegeben, wobei $g_{ri}$ und $\Phi_{ti}$ ein Betrag bzw. eine Phasenantwort der Empfänger in dem Sendeempfänger-Array (610a-n) sind.

**14.** Verfahren nach Anspruch 12, wobei das Sendeempfänger-Array, T, eine Diagonalmatrix ist, wie durch $T=\text{diag}(g_{ti}\exp(j\Phi_{ti}))$ angegeben, wobei $g_{ti}$ und $\Phi_{ti}$ ein Betrag bzw. eine Phasenantwort der Sender in dem Sendeempfänger-Array (610a-n) sind.

**15.** Verfahren nach Anspruch 12, wobei das Koppelnetz, $E_c$, eine Diagonalmatrix ist, wie durch $E_c=\text{diag}(g_{ci}\exp(j\Phi_{ci}))$ angegeben, wobei $g_{ci}$ und $\Phi_{ci}$ ein Betrag bzw. eine Phasenantwort von Kanälen in dem Koppelnetz (640, 1010, 1500, 1700) sind.

**Revendications**

**1.** Appareil dans un système de communication sans fil, l'appareil comprenant :

un réseau d'antennes (605a à n, 1005, 1505, 1705) comprenant une pluralité d'antennes ;

un réseau d'émetteurs-récepteurs (610a à n) comprenant une pluralité d'émetteurs-récepteurs connectés électriquement à une ou plusieurs des antennes, respectivement ;

un réseau de couplage (640, 1010, 1500, 1700) connecté électriquement à chacun des émetteurs-récepteurs ;

un émetteur-récepteur d'étalonnage (645, 1515) connecté électriquement à chacun des émetteurs-récepteurs du réseau d'émetteurs-récepteurs (610a à n) via le réseau de couplage (640, 1010, 1500, 1700) au niveau de chaque antenne, l'émetteur-récepteur d'étalonnage (645, 1515) comprenant :

un émetteur d'étalonnage, Tx, configuré pour transmettre un premier signal d'étalonnage via le réseau de couplage (640, 1010, 1500, 1700), et

un récepteur d'étalonnage, Rx, configuré pour recevoir un deuxième signal d'étalonnage basé sur le premier signal d'étalonnage, qui a été transmis par le réseau d'émetteurs-récepteurs (610a à n) dans un schéma de duplexage par répartition temporelle, TDD, via le réseau de couplage (640, 1010, 1500, 1700),

dans lequel l'émetteur-récepteur d'étalonnage (645, 1515) est configuré pour :

générer une mesure d'étalonnage Rx, $R_1$, sur la base du premier signal d'étalonnage reçu par le réseau d'émetteurs-récepteurs (610a à n) via le réseau de couplage (640, 1010, 1500, 1700) ; et

générer une mesure d'étalonnage Tx, $T_1$, sur la base de la réception du deuxième signal d'étalonnage par le récepteur d'étalonnage via le réseau de couplage (640, 1010, 1500, 1700) ; et

au moins un processeur (625) configuré pour effectuer un étalonnage Tx/Rx conjoint, TRx, basé sur HR, $R_1$ et $T_1$, où H est une réponse de canal dans l'interface air, R est une réponse de canal de récepteurs dans le réseau d'émetteurs-récepteurs (610a à n), dans lequel pour effectuer l'étalonnage conjoint TRx, l'au moins un processeur est configuré pour générer une estimation de canal de liaison descendante, HT, sur la base d'une équation de $HRR_1^{-1}T_1 = HT$.

2. Appareil selon la revendication 1, dans lequel $R_1$ comprend un produit de la réponse de canal des récepteurs dans le réseau d'émetteurs-récepteurs, R, et d'une réponse de canal du réseau de couplage, $E_c$, et dans lequel $T_1$ comprend un produit d'une réponse de canal d'émetteurs dans le réseau d'émetteurs-récepteurs, T, et la réponse de canal du réseau de couplage, $E_c$.

3. Appareil selon la revendication 2, dans lequel le réseau d'émetteurs-récepteurs, R, le réseau de couplage, $E_c$, et le réseau d'émetteurs-récepteurs, T, comprennent une matrice diagonale, respectivement.

4. Appareil selon la revendication 3, dans lequel le réseau d'émetteurs-récepteurs, R, est une matrice diagonale telle que donnée par $R = diag(g_{ri}exp(j\Phi_{ri}))$ où $g_{ri}$ et $\Phi_{ti}$ sont une magnitude et une réponse de phase des récepteurs dans le réseau d'émetteurs-récepteurs (610a à n), respectivement.

5. Appareil selon la revendication 3, dans lequel le réseau d'émetteurs-récepteurs, T, est une matrice diagonale telle que donnée par $T = diag(g_{ti}exp(j\Phi_{ti}))$ où $g_{ti}$ et $\Phi_{ti}$ sont une magnitude et une réponse de phase des émetteurs dans le réseau d'émetteurs-récepteurs (610a à n), respectivement.

6. Appareil selon la revendication 3, dans lequel le réseau de couplage, $E_c$, est une matrice diagonale telle que donnée par $E_c = diag(g_{ci}exp(j\Phi_{ci}))$ où $g_{ci}$ et $\Phi_{ci}$ sont une magnitude et une réponse de phase des canaux dans le réseau de couplage (640, 1010, 1500, 1700), respectivement.

7. Appareil selon la revendication 1, dans lequel l'au moins un processeur (625) est en outre configuré pour calculer un précodeur sur la base d'une estimation des informations d'état de canal de liaison descendante, DL CSI.

8. Appareil selon la revendication 1, dans lequel le réseau de couplage (640, 1010, 1500, 1700) est connecté au réseau d'émetteurs-récepteurs (610a à n) qui comprend plusieurs émetteurs-récepteurs et au réseau d'antennes (605a à n, 1005, 1505, 1705) qui comprend plusieurs antennes au niveau des ports d'antenne.

9. Appareil selon la revendication 1, dans lequel l'étalonnage Rx est calculé sur la base des récepteurs dans le réseau d'émetteurs-récepteurs (610a à n) capturant simultanément le premier signal d'étalonnage, et dans lequel une mesure d'étalonnage Tx est calculée sur la base du récepteur d'étalonnage recevant le deuxième signal d'étalonnage dans un schéma temporel un par un depuis les émetteurs dans le réseau d'émetteurs-récepteurs (610a à n).

10. Procédé pour faire fonctionner un appareil dans un système de communication sans fil, le procédé comprenant :

la transmission, par un émetteur d'étalonnage, Tx, d'un premier signal d'étalonnage via un réseau de couplage (640, 1010, 1500, 1700) qui est électriquement connecté à chaque émetteur-récepteur dans un réseau d'émetteurs-récepteurs (610a à n), le réseau d'émetteurs-récepteurs (610a à n) comprenant une pluralité d'émetteurs-récepteurs connectés électriquement à une ou plusieurs d'une pluralité d'antennes, respectivement, dans un réseau d'antennes (605a à n, 1005, 1505, 1705) ;

la réception, par un récepteur d'étalonnage, Rx, d'un deuxième signal d'étalonnage, basé sur le premier signal d'étalonnage, qui a été transmis par le réseau d'émetteurs-récepteurs (610a à n) dans un schéma de duplexage par répartition temporelle, TDD, via le réseau de couplage (640, 1010, 1500, 1700), le récepteur d'étalonnage et l'émetteur d'étalonnage inclus dans un émetteur-récepteur d'étalonnage (645) qui est électriquement connecté à chacun des émetteurs-récepteurs du réseau d'émetteurs-récepteurs (610a à n) via le réseau de couplage (640, 1010, 1500, 1700) au niveau de chaque antenne ;

la génération d'une mesure d'étalonnage Rx, $R_1$, sur la base du premier signal d'étalonnage reçu par le réseau d'émetteurs-récepteurs (610a à n) via le réseau de couplage (640, 1010, 1500, 1700);

la génération d'une mesure d'étalonnage Tx, $T_1$, sur la base de la réception du deuxième signal d'étalonnage par le récepteur d'étalonnage via le réseau de couplage (640, 1010, 1500, 1700)

l'exécution d'un étalonnage conjoint Tx/Rx, TRx, basé sur HR, $R_1$ et $T_1$, où H est une réponse de canal dans l'interface air, R est une réponse de canal de récepteurs dans le réseau d'émetteurs-récepteurs (610a à n) ; et

la génération d'une estimation de canal de liaison descendante, HT, sur la base d'une équation de $HRR_1^{-1}T_1$ = HT.

11. Procédé selon la revendication 10, dans lequel Ri comprend un produit de la réponse de canal des récepteurs dans le réseau d'émetteurs-récepteurs, R, et d'une réponse de canal du réseau de couplage, $E_c$, et dans lequel $T_1$ comprend un produit d'une réponse de canal d'émetteurs dans le réseau d'émetteurs-récepteurs, T, et la réponse de canal du réseau de couplage, $E_c$.

12. Procédé selon la revendication 11, dans lequel le réseau d'émetteurs-récepteurs, R, le réseau de couplage, $E_c$, et le réseau d'émetteurs-récepteurs, T, comprennent une matrice diagonale, respectivement.

13. Procédé selon la revendication 12, dans lequel le réseau d'émetteurs-récepteurs, R, est une matrice diagonale telle que donnée par R = diag($g_{ri}$exp(j$\Phi_{ri}$)) où gri et $\Phi_{ri}$ sont une magnitude et une réponse de phase des récepteurs dans le réseau d'émetteurs-récepteurs (610a à n), respectivement.

14. Procédé selon la revendication 12, dans lequel le réseau d'émetteurs-récepteurs, T, est une matrice diagonale telle que donnée par T = diag($g_{ti}$exp(j$\Phi_{ti}$)) où $g_{ti}$ et $\Phi_{ti}$, sont une magnitude et une réponse de phase des émetteurs dans le réseau d'émetteurs-récepteurs (610a à n), respectivement.

15. Procédé selon la revendication 12, dans lequel le réseau de couplage, $E_c$ est une matrice diagonale donnée par $E_c$ = diag($g_{ci}$exp(j$\Phi_{ci}$)) où $g_{ci}$ et $\Phi_{ci}$ sont une magnitude et une réponse de phase des canaux dans le réseau de couplage (640, 1010, 1500, 1700), respectivement.

[Fig. 1]

[Fig. 2]

[Fig. 3]

[Fig. 4]

[Fig. 5]

[Fig. 6]

502

[Fig. 7]

[Fig. 8A]

EP 3 586 450 B1

[Fig. 8B]

[Fig. 9]

[Fig. 10]

[Fig. 11]

[Fig. 12]

1200

[Fig. 13]

1300

Calibration
Waveform
ROM

Switch

Downlink
signal
generator

To each
individual DL
DAC

Regular
DL Frame
1315

Calibration
Frame
1320

Regular
DL Frame
1325

Time

FD-MIMO
Transmitter
timing
1305

DL TX 1 · · · · · DL TX 1

DL TX 2 · · · · DL TX 2

DL TX 3 · · · DL TX 3

DL TX N · · · · DL TX N

RF coupler

Receiver timing
1310

Discarded · · · · Discarded

N received
calibration
symbols

[Fig. 14]

1400

Calibration
symbols

Calibration
transmitter
timing

RF coupler

Regular
UL Frame

Regular
UL Frame

Time

| UL RX 1 | | | | | UL RX 1 |

| UL RX 2 | | | | | UL RX 2 |

FD-MIMO
Receiver timing

| UL RX 3 | | | | | UL RX 3 |

| UL RX N | | | | | UL RX N |

[Fig. 15]

[Fig. 16]

1600

Group 1: Ant 0, 1, 2, 3
Group 2: Ant 4, 5, 6, 7

Group 3: Ant 8, 9, 10, 11
Group 4: Ant 12, 13, 14, 15

[Fig. 17]

[Fig. 18]

1800

Group 1: Ant 0, 8;
Group 2: Ant 4, 12

Group 3: Ant 1, 9;
Group 4: Ant 5, 13

Group 5: Ant 2, 10;
Group 6: Ant 6, 14

Group 7: Ant 3, 11;
Group 8: Ant 7, 15

[Fig. 19]

1900

[Fig. 20]

[Fig. 21]

2100

```
                    ┌─────────────┐
                    │    START    │
                    └──────┬──────┘
                           ▼
    ┌──────────────────────────────────────┐
    │ Generating an uplink channel          │
    │ measurement (HR) based on one or      │──2105
    │ more uplink signals                   │
    └──────────────────┬───────────────────┘
                       ▼
    ┌──────────────────────────────────────┐
    │ Sending a calibration signal via a    │
    │ coupling network for transmission     │──2110
    └──────────────────┬───────────────────┘
                       ▼
    ┌──────────────────────────────────────┐
    │ Generating an Rx calibration          │──2115
    │ measurement (R₁)                      │
    └──────────────────┬───────────────────┘
                       ▼
    ┌──────────────────────────────────────┐
    │ Generating a Tx calibration           │──2120
    │ measurement (T₁)                      │
    └──────────────────┬───────────────────┘
                       ▼
    ┌──────────────────────────────────────┐
    │ Performing a joint Tx/Rx (TRx)        │
    │ calibration based on HR, R₁, and T₁   │──2125
    └──────────────────┬───────────────────┘
                       ▼
                ┌─────────────┐
                │     END     │
                └─────────────┘
```

Generating an uplink channel measurement (HR) based on one or more uplink signals — 2105

Sending a calibration signal via a coupling network for transmission — 2110

Generating an Rx calibration measurement ($R_1$) — 2115

Generating a Tx calibration measurement ($T_1$) — 2120

Performing a joint Tx/Rx (TRx) calibration based on HR, $R_1$, and $T_1$ — 2125

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015255868 A

**Non-patent literature cited in the description**

- Over the Air Calibration for Reciprocity Based MIMO. 3GPP DRAFT; R1-1609725. Mobile Competence Centre, 30 September 2016, vol. RAN WG1